(19) Europäisches Patentamt
European Patent Office
Office européen des brevets

(11) EP 3 161 028 B1

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(21) Anmeldenummer: **15731328.9**

(22) Anmeldetag: **24.06.2015**

(51) Int Cl.:
***C08F 220/38*** *(2006.01)*

(86) Internationale Anmeldenummer:
**PCT/EP2015/064196**

(87) Internationale Veröffentlichungsnummer:
**WO 2015/197662 (30.12.2015 Gazette 2015/52)**

(54) **COPOLYMER ENTHALTEND OXAZOLIN-MONOMERE UND DESSEN VERWENDUNG ALS VERNETZER**

COPOLYMER CONTAINING OXAZOLINE MONOMERS AND USE THEREOF AS A CROSS-LINKING AGENT

COPOLYMÈRE CONTENANT DES MONOMÈRES D’OXAZOLINE ET SON UTILISATION COMME AGENT DE RÉTICULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2014 EP 14174076**

(43) Veröffentlichungstag der Anmeldung:
**03.05.2017 Patentblatt 2017/18**

(73) Patentinhaber: **BASF SE**
**67056 Ludwigshafen am Rhein (DE)**

(72) Erfinder:
- **ZORN, Matthias**
  **69469 Weinheim (DE)**
- **DIECKMANN, Yvonne**
  **67454 Hassloch (DE)**
- **PETERS-STEUER, Iris**
  **67245 Lambsheim (DE)**
- **MICHL, Kathrin**
  **67063 Ludwigshafen (DE)**

(56) Entgegenhaltungen:
**EP-A1- 1 612 238** **EP-A1- 2 680 343**
**WO-A2-2004/058837** **JP-A- 2001 310 914**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 161 028 B1

Printed by Jouve, 75001 PARIS (FR)

## Beschreibung

Die vorliegende Anmeldung betrifft neue Copolymere und Verfahren zu deren Herstellung, wobei die Copolymere als Bausteine enthalten:

ein $C_{1-20}$-Alkyl(meth)acrylat und/oder $C_{8-20}$-Vinylaromaten (Monomer a);
ein monoethylenisch ungesättigtes, hydrophiles Monomer umfassend mindestens eine Sulfonsäuregruppe ($-SO_3M$) (Monomer b); und
ein monoethylenisch ungesättigtes Monomer umfassend mindestens eine Oxazolingruppe (Monomer c);
und wobei der Anteil der Monomere (b) und (c) in Summe weniger als 50 Gew.-%, bezogen auf die gesamte Menge der Monomere im Copolymer A, beträgt.

Die vorliegende Erfindung betrifft zudem die Verwendung der erfindungsgemäßen Copolymere als Vernetzer, insbesondere als Vernetzer für Acrylsäure-haltige Polymere, wie beispielsweise filmbildenden Polyacrylsäure-Latices, Harze oder Lösungspolymere. Die vorliegende Erfindung betrifft zudem vernetzende Zusammensetzungen enthaltend die erfindungsgemäßen Copolymere.

Filmbildenden Polyacrylsäure-Latices, z.B. Polymerdispersionen der Reihe Acronal® (BASF SE, Ludwigshafen) können beispielsweise als Bindemittel oder zur Beschichtung von Oberflächen dienen. Diese können beispielsweise bei der Beschichtung und Herstellung von Holzprodukten, wie Spannplatten, Holzpaneelen, Korkwaren, Parket, oder Papierprodukten, wie Papier, Karton, Pappe, Tapete, oder bei der Imprägnierung von Holz eingesetzt werden.

Durch den Zusatz von Vernetzern, d.h. polyfunktionellen Verbindungen, die insbesondere mit den freien Carboxy-Gruppen der Latices reagieren können, werden vernetzende Systeme erhalten, welche beispielsweise bei erhöhten Temperaturen aushärten. Solche vernetzende Systeme werden häufig bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil-oder Lederhilfsmitteln und Schlagzäh-Modifizierer oder zur Modifizierung von mineralischen Bindemitteln und Kunststoffen, eingesetzt.

Oxazolin-funktionalisierte Polymere und deren Verwendung zur Vernetzung von Polycarbonsäuren sind im Stand der Technik beschrieben. Die Oxazolingruppen reagieren mit Carboxy-gruppen, Phosphatgruppen, phenolischen Hydroxygruppen oder auch mit aromatischen Thiol-gruppen unter Ringöffnung. Bei der Vernetzung von Polycarbonsäuren, beispielsweise von Polyacrylsäure-Latices, mit einem Oxazolin-funktionalisierten Polymer entstehen stabile Ester-Verbindungen, wobei die Reaktion der Oxazolingruppen mit den Carboxygruppen oftmals schon bei Raumtemperatur erfolgen kann. Bei erhöhten Temperaturen im Bereich von etwa 80 bis 120 °C läuft diese Reaktion in der Regel schnell ab.
Vernetzer auf Basis von Oxazolin-funktionalisierten Polymeren, insbesondere 2-Oxazolin-funktionalisierten Polymeren, sind kommerziell erhältlich, z.B. EPOCROS® (Nippon Shokubai Co., Ltd, Japan). Grundsätzlich kann man zwei Arten von vernetzenden Oxazolin-funktionalisierten Polymeren unterscheiden: a) wasserlösliche Oxazolin-funktionalisierte Polymere, welche durch radikalische Lösungspolymerisation der entsprechenden Monomere erhalten werden, und b) Oxazolin-funktionalisierte Polymerdispersionen (Latices), welche durch Emulsionspolymerisation der entsprechenden Monomere erhalten werden. Die bekannten wasserlöslichen Oxazolin-funktionalisierten Polymere umfassen oft Acrylate, ethoxylierte Monomer-Einheiten und Oxazolin-Monomer-Einheiten.

Das Patent US 3,509,235 beschreibt ein Polymer, welches durch radikalische Polymerisation eines 2-Alkenyl-Oxazolin-Derivats und optional weiteren ungesättigten Monomere erhalten wird. Es wird ferner die Vernetzung eines Polyacrylsäure-Polymers unter Verwendung dieses Oxazolin-Polymers beschrieben, wobei die Umsetzung etwa in stöchiomometrischer Menge erfolgt. Insbesondere werden Copolymere aus 2-Isopropenyl-oxazolin und Acrylaten beschrieben und deren aushärtbaren Mischungen mit Acrylat-Acrylsäure-Copolymeren. Die Verwendung der Oxazolin-Polymere in thermisch aushärtenden Lacken wird beschrieben.

Das Patent US 5,300,602 beschreibt ein wasserlösliches Polymer enthaltend Oxazolingruppen und eine Polyethylenglykol-Seitenkette. Das Polymer wird durch Polymerisation einer Monomer-Mischung erhalten, welche ein Oxazolin-Monomer, ein Acrylsäureester und optional ein weiteres Monomer, z.B. ein hydrophiles Monomer wie Acrylsäure, enthält. Insbesondere soll der Anteil an hydrophilen Monomeren, zu denen auch die Oxazolin-Monomere gezählt werden, insgesamt mindestens 50 Gew.-% betragen.

Das Patent US 2,897,182 beschreibt die Herstellung verschiedener ethylenisch ungesättigter Oxazolin- und Oxazin-Verbindungen sowie deren radikalische Homo- und Copolymerisation. Als Comonomere werden unter anderem Acrylsäure, Acrylester, Acrylamide, Acrylnitril und Styrol genannt.

Das Dokument JP 2001/310014 beschreibt ein wasserabsorbierendes Harz, welches ein Vernetzungsmittel umfassend Oxazolingruppen und optional ein wasserlösliches, ungesättigtes Monomer umfasst, welches saure Gruppen enthält. Das Dokument beschreibt die Verwendung des Harzes als Absorber in Hygiene-und Sanitärartikeln.

Das Dokument JP 2008/069249 beschreibt wässrige Polymerharze zur Beschichtung von Stahl, z.B. von Automobilteilen. Das wässrige Polymerharz stellt insbesondere einen aushärtbaren Latex dar. Das Polymer umfasst ein Oxazolin-Monomer, ein Monomer enthaltend reaktive Gruppen, und einen reaktiven Emulgator.

Das Dokument JP 2001/310914 beschreibt einen Vernetzer umfassend Oxazolin-Gruppen, der zur Vernetzung von wasserabsorbierenden Harzen, insbesondere von Harzen auf Basis von Polyacrylsäure, dienen soll. Es sollen wasserabsorbierende Harze mit hoher Wasserabsorption und einem geringen löslichen Anteil erhalten werden. Bei dem Vernetzer handelt es sich z. B. um Copolymere aus Acrylaten, Acrylsäure, Methoxypolyethylenglykol und einem Oxazolin-Monomer.

Das Dokument EP-A 2 680 343 beschreibt eine poröse Membran enthaltend nicht-leitfähige Partikel mit definierter Partikelstruktur, ein (Meth)acrylnitril/ (Meth)acrylat-Copolymer als Binder und ein wasserlösliches Polymer enthaltend Sulfonsäuregruppen.

Es hat sich überraschenderweise gezeigt, dass ein vernetzendes Copolymer enthaltend (als Monomer-Baustein) Oxazolin-Gruppen vorteilhafte Eigenschaften, insbesondere verbesserte vernetzende Wirkung und/oder Binderwirkung, aufweist, wenn es einen Anteil an hydrophilen, wasserlöslichen Monomeren von weniger als 50 Gew.-% aufweist. Insbesondere weist das vernetzende Copolymer vorteilhafte Eigenschaften auf, wenn es mindestens 50 Gew.-% eines (Meth)acrylats und zudem als hydrophile, wasserlösliche Monomere ein Sulfonsäure-Gruppen umfassendes Monomer und ein Oxazolin-Gruppen umfassendes Monomer enthält.

Das gefundene Ergebnis war überraschend, da im Stand der Technik wasserlösliche vernetzende Polymere mit einem höheren Anteil an hydrophilen, wasserlöslichen Monomeren von mindestens 50 Gew.-% beschrieben sind. Die erfindungsgemäßen Copolymere weisen einen vergleichsweise geringen Anteil an hydrophilen Monomeren und damit eine geringerer Wasserlöslichkeit auf, zeigen jedoch verbesserte Bindeeigenschaften, z.B. in der Bindung von Cellulosefasern.

Die vorliegende Erfindung betrifft ein Copolymer A umfassend (als Baustein):

a) mindestens ein Monomer (a) ausgewählt aus der Gruppe bestehend aus $C_{1-20}$-Alkyl(meth)acrylaten und $C_{8-20}$-Vinylaromaten;

b) mindestens ein ethylenisch ungesättigtes Monomer (b), welches mindestens eine Sulfonsäuregruppe ($-SO_3M$) umfasst;

c) mindestens ein ethylenisch ungesättigtes Monomer (c), welches mindestens eine Oxazolingruppe umfasst;

d) und optional mindestens ein weiteres Monomer (d) und/oder Additiv;

wobei der Anteil der Monomere (b) und (c) in der Summe weniger als 50 Gew.-%, bezogen auf die gesamte Menge der Monomere im Copolymer A, beträgt,

und wobei es sich bei dem Copolymer A um ein wasserlösliches Polymer handelt, wobei wasserlöslich eine Löslichkeit in Wasser von mindestens 100 g/l umfasst.

In einer bevorzugten Ausführungsform beträgt im erfindungsgemäßen Copolymer A der Anteil der Monomere (b) und (c) in der Summe 2 bis 49,9 Gew.-%, bevorzugt 10 bis 49,5 Gew.-%, insbesondere bevorzugt 25 bis 49 Gew.-%, besonders bevorzugt 30 bis 45 Gew.-%, bezogen auf die gesamte Menge der Monomere im Copolymer A.

In einer bevorzugten Ausführungsform liegt das Gewichtsverhältnis Monomere (b) zu Monomer (c) im Bereich von 0,1 bis 1, bevorzugt von 0,25 bis 0,9; insbesondere von 0,3 bis 0,75, besonders bevorzugt im Bereich von 0,3 bis 0,5.

Typischerweise beträgt der Anteil der wasserlöslichen Monomere im Copolymer A weniger als 50 Gew.-%, bezogen auf die gesamte Menge der Monomere im Copolymer A.

Der Ausdruck "wasserlöslich" bezeichnet im Sinne der vorliegenden Erfindung eine Löslichkeit der entsprechenden Substanz in Wasser von mindestens 100 g/l, bevorzugt mindestens 200 g/l und besonders bevorzugt mindestens 300 g/l.

Dem Fachmann ist bekannt, dass die Wasserlöslichkeit von Substanzen, insbesondere der im Folgenden beschriebenen wasserlöslichen Monomere (b) und (c), von der Art des wässrigen Mediums, insbesondere vom pH-Wert, und von der Temperatur abhängt. Die Wasserlöslichkeit im Sinne der vorliegenden Erfindung bezieht sich insbesondere auf Raumtemperatur (25 °C) und auf die maximal zu erreichende Löslichkeit in Wasser. Insbesondere bezieht sich die Wasserlöslichkeit der Monomere im Sinne der vorliegenden Erfindung auf die Löslichkeit im unten beschriebenen wässrigen Reaktionsmedium für die radikalische Lösungspolymerisation. Der Begriff "wasserlöslich" umfasst insbesondere auch alkalilösliche Lösungen von wasserlöslichen Monomeren, d.h. dass die Monomere im sauren pH-Bereich als Dispersionen vorliegen und sich erst im alkalischen pH-Bereich in Wasser lösen. Insbesondere ist der Begriff "wasserlöslich" so zu verstehen, dass homogene, klare, wässrige Phasen erhalten werden.

Unter "wasserlöslichen Monomeren" sind Monomere mit der oben genannten Wasserlöslichkeit zu verstehen, insbesondere umfasst der Ausdruck "wasserlösliche Monomere" im Sinne der vorliegenden Erfindung die oben genannten Monomere (b) und (c). Insbesondere weisen die wasserlösliche Monomere im Sinne der Erfindung, insbesondere die Monomere (b) und (c), eine Wasserlöslichkeit mindestens 100 g/l, bevorzugt mindestens 200 g/l und besonders bevorzugt mindestens 300 g/l, auf.

In einer besonders bevorzugten Ausführungsform enthält das erfindungsgemäße Copolymer A ausschließlich die Monomere (b) und (c) als wasserlösliche Monomere im Sinne der vorliegenden Erfindung. Bevorzugt enthält das erfindungsgemäße Copolymer A ausschließlich die Monomere (b) und (c) als wasserlösliche Monomere im Sinne der vorliegenden Erfindung, wobei die Summe der Monomere (b) und (c) weniger als 50 Gew.-%, bevorzugt 2 bis 49,9 Gew.-%, bevorzugt 10 bis 49,5 Gew.-%, insbesondere bevorzugt 25 bis 49 Gew.-%, besonders bevorzugt 30 bis 45 Gew.-%, bezogen auf die gesamte Menge der Monomere im Copolymer A, beträgt.

Bei den oben genannten Monomeren (a) bis (c) und optional (d) handelt es sich um radikalisch polymerisierbare Monomere, d.h. um Monomere enthaltend mindestens eine polymerisierbare ungesättigte Gruppe, insbesondere mindestens eine ethylenisch ungesättigte Gruppe.

Bevorzugt handelt es sich bei den Monomeren (a) bis (c) und optional (d) um monoethylenisch ungesättigte Monomere.

Unter Copolymer umfassend die Monomere versteht der Fachmann im Sinne der vorliegenden Erfindung, dass das entsprechende Copolymer aus den genannten Monomeren hergestellt wurde, insbesondere durch radikalische Polymerisation der genannten Monomere. Die erfindungsgemäßen Copolymere enthalten somit die Monomer-Einheiten bzw. sind aus diesen aufgebaut, welche den eingesetzten Monomeren entsprechen. Der Fachmann weiß, dass das Copolymer zudem, je nach Art der Herstellung, Anfangs- und/oder Endgruppen (z.B. Radikal-Startergruppen) und/oder Reste von Additiven, z.B. von Tensiden und/oder Radikalstarter, aufweisen kann.

In einer bevorzugten Ausführungsform besteht das erfindungsgemäße Copolymer A aus den genannten Monomeren (a), (b), (c) und optional (d), d.h. es wurde durch Polymerisation ausschließlich der genannten Monomere hergestellt. In einer bevorzugten Ausführungsform besteht das erfindungsgemäße Copolymer A aus den genannten Monomeren (a), (b) und (c), d.h. es wurde durch Polymerisation ausschließlich der genannten Monomere hergestellt.

Die vorliegende Erfindung betrifft ein wasserlösliches Copolymer A. Insbesondere betrifft die Erfindung ein wasserlösliches Copolymer, wobei es sich bei dem Copolymer nicht um einen Latex handelt. Im Sinne der vorliegenden Erfindung werden Polymer-Dispersionen, die das Produkt einer Emulsionspolymerisation sind, als Latex bezeichnet.

Monomer (a)

Das erfindungsgemäße Copolymer A umfasst mindestens ein Monomer (a) ausgewählt aus der Gruppe bestehend aus $C_{1-20}$-Alkyl(meth)acrylaten, insbesondere aus $C_{1-12}$-Alkyl(meth)acrylaten, besonders bevorzugt aus $C_{1-8}$-Alkyl(meth)acrylaten, und $C_{8-20}$-Vinylaromaten, insbesondere aus $C_{8-10}$-Vinylaromaten.

Im Sinne der vorliegenden Erfindung umfasst der Begriff "(Meth)acryl" die entsprechenden Acrylate und/oder Methacrylate bzw. Acrylat- und/oder Methacrylatderivate. Beispielsweise umfasst der Begriff "Methyl(meth)acrylat" Methylacrylat und/oder Methylmethacrylat. Beispielsweise umfasst der Begriff "(Meth)acrylamid" Acrylamid und/oder Methacrylamid.

Insbesondere stellt das mindestens eine Monomer (a) ein monoethylenisch ungesättigtes, hydrophobes Monomer dar, welches insbesondere nicht wasserlöslich ist, d.h. die oben definierte Wasserlöslichkeit nicht aufweist. Insbesondere weist das mindestens eine Monomer (a) eine Wasserlöslichkeit kleiner 300 g/l, bevorzugt kleiner 200 g/l, insbesondere bevorzugt kleiner 100 g/l, besonders bevorzugt kleiner 25 g/l auf.

Typischerweise kann das mindestens eine Monomer (a) ausgewählt werden aus der Gruppe bestehend aus: Methyl(meth)acrylat, Ethyl(meth)acrylat, n-Butyl(meth)acrylat, Isobutyl(meth)acrylat, t-Butyl-(meth)acrylat, sec-Butyl(meth)acrylat, 2-Ethylhexyl(meth)acrylat, Tridecyl(meth)acrylat, Cyclohexyl(meth)acrylat, n-Octyl(meth)acrylat, n-Lauryl(meth)acrylat, Benzyl(meth)acrylat, Styrol, $\alpha$-Methylstyrol und Vinyltoluol.

In einer bevorzugten Ausführungsform handelt es sich bei dem Monomer (a) um ein oder mehrere $C_{1-20}$-Alkyl(meth)acrylate, bevorzugt um ein oder mehrere $C_{1-12}$-Alkyl(meth)acrylate, besonders bevorzugt um ein oder mehrere $C_{1-8}$-Alkyl(meth)acrylate. Besonders bevorzugt handelt es sich bei Monomer (a) um mindestens ein Monomer ausgewählt aus Methylacrylat (MA), Methylmethacrylat (MMA), Ethylacrylat (EA), Ethylmethacrylat (EMA), n-Butylacrylat, n-Butylmethacrylat, t-Butylacrylat, t-Butylmethacrylat, 2-Ethylhexylacrylat und 2-Ethylhexyl-methacrylat bevorzugt ausgewählt aus Methylacrylat, Methylmethacrylat, n-Butylacrylat und n-Butylmethacrylat. Besonders bevorzugt handelt es sich bei dem Monomer (a) um Methylacrylat und/oder Methylmethacrylat. Besonders bevorzugt handelt es sich bei dem Monomer (a) um n-Butylacrylat und/oder n-Butylmethacrylat. Besonders bevorzugt handelt es sich bei dem Monomer (a) um eine Mischung aus n-Butylacrylat und Methylmethacrylat.

Das mindestens eine Monomer (a) ist bevorzugt in einer Menge im Bereich von 50 bis 98 Gew.-%, bevorzugt 50,5 bis 85 Gew.-%, insbesondere bevorzugt 55 bis 72 Gew.-%, bezogen auf die gesamte Menge der Monomere im Copolymer A, enthalten.

Bevorzugt umfasst das erfindungsgemäße Copolymer A als Monomer (a) 50 bis 98 Gew.-%, bevorzugt 50,5 bis 85 Gew.-%, insbesondere bevorzugt 55 bis 72 Gew.-%, bezogen auf die gesamte Menge der Monomere im Copolymer A, mindestens ein Monomer ausgewählt aus der Gruppe bestehend aus $C_{1-8}$-Alkyl(meth)acrylaten, bevorzugt bestehend aus Methylacrylat (MA), Methylmethacrylat (MMA), Ethylacrylat (EA), Ethylmethacrylat (EMA), n-Butylacrylat und n-Butylmethacrylat, besonders bevorzugt bestehend aus Methylacrylat, Methylmethacrylat, n-Butylacrylat und n-Butylmethacrylat.

Monomer (b)

Das erfindungsgemäße Copolymer A umfasst mindestens ein ethylenisch ungesättigtes Monomer (b), welches mindestens eine Sulfonsäuregruppe ($-SO_3M$) umfasst. Insbesondere handelt es sich bei Monomer (b) um ein monoethylenisch ungesättigtes, hydrophiles Monomer (b), welches mindestens eine Sulfonsäuregruppe ($-SO_3M$) umfasst. M kann insbesondere für Wasserstoff, Ammonium oder ein Metall, bevorzugt für ein Metall, stehen. Besonders bevorzugt umfasst das Monomer (b) genau eine Sulfonsäuregruppe ($-SO_3M$).

Typischerweise handelt es sich bei der Sulfonsäuregruppe um eine Gruppe $-SO_3M$, wobei M für Wasserstoff, Ammonium oder ein Metall, bevorzugt für Ammonium oder ein Metall, steht. Insbesondere steht M für ein Alkali- und/oder Erdalkalimetall, bevorzugt für ein Metall ausgewählt aus Natrium (Na), Kalium (K), Magnesium (Mg) und Calcium (Ca). Besonders bevorzugt handelt es sich bei der mindestens einen Sulfonsäuregruppe um eine Gruppe $-SO_3Na$ und/oder $-SO_3K$, besonders bevorzugt um $-SO_3Na$.

Dem Fachmann ist bekannt, dass die Sulfonsäuregruppen der Monomere (b) je nach umgebendem Medium, insbesondere je nach pH-Wert, ganz oder teilweise deprotoniert vorliegen können. Insbesondere bevorzugt liegt das Monomer (b) bei der Herstellung des Copolymers A und/oder dem weiter unten beschriebenen Verfahren zur Vernetzung eines polyfunktionellen Polymers P in der deprotonierten Form vor, besonders bevorzugt liegt es vollständig in der deprotonierten Form vor. Typischerweise wird das Monomer (b) bei der Herstellung des Copolymers A in deprotonierter Form, d.h. in Form eines Metallsalzes, insbesondere eines Natrium- und/oder Kaliumsalzes, eingesetzt. Durch die Verwendung des Monomers (b) in der deprotonierten bzw. vollständig deprotonierten Form soll insbesondere sichergestellt werden, dass keine Reaktion der Sulfonsäuregruppen mit den Oxazolingruppen des Monomers (c) stattfindet.

Bei den hydrophilen Monomeren (b) handelt es sich bevorzugt um Monomere der allgemeinen Formel (I)

$$H_2C{=}C(R^1)R^2 \qquad (I),$$

wobei $R^1$ für H oder Methyl steht und $R^2$ für einen Rest stehen, welcher mindestens eine Sulfonsäuregruppe, insbesondere eine Gruppe $-SO_3M$, mit M ist ein Metall ausgewählt aus Natrium, Kalium , Magnesium und Calcium, umfasst. Die mindestens eine Sulfonsäuregruppe kann direkt an die ethylenische Gruppe angebunden sein, oder aber über eine oder mehrere verknüpfende Gruppen mit der ethylenischen Gruppe verbunden sein. Insbesondere steht $R^2$ für-$Y-SO_3M$, wobei es sich bei -Y- um eine verknüpfende Gruppe handelt ausgewählt aus einer Bindung, $C_{1-10}$-Alkylen, Phenylen, $C_{1-10}$-Alkylphenylen, $-C(=O)-O-(C_{1-12}\text{-Alkylen})-$; $-C(=O)-NH-(C_{1-12}\text{-Alkylen})-$; $-O-(-CH_2-CH(R^a)-O)_m-$; $-C(=O)-O(-CH_2-CH(R^a)-O-)_m-$; mit $R^a$ ist H oder Methyl und m ist 1 bis 200, bevorzugt 10 bis 100.

Bei der Gruppe $C_{1-12}$-Alkylen handelt es sich insbesondere um einen verknüpfenden, zweiwertigen, linearen oder verzweigten Kohlenwasserstoffrest umfassend 1 bis 12 Kohlenstoffatome. Bevorzugt kann es sich um eine Gruppe $-(CH_2)_n-$ mit n gleich 1 bis 12; $-CH(CH_3)-CH_2-$;$-CH(CH_3)-CH_2-\ CH_2\ -$; $-C(CH_3)_2-CH_2-$; $-C(CH_3)_2-CH_2-\ CH_2-$; $-C(CH_3)_2-CH_2-C(CH_3)_2)-CH_2-$ oder $-C(CH_3)_2-CH_2-\ CH_2-C(CH_3)_2)-CH_2-$handeln.

Insbesondere bevorzugt handelt es sich bei -Y- um $-C(=O)-NH-(C_{1-12}\text{-Alkylen})-$, insbesondere um $-C(=O)-NH-(CH_2)_n-$, mit n=1 bis 12, oder $-C(=O)-NH-C(CH_3)_2-CH_2-$.

Bevorzugt handelt es sich bei Monomer (b) um eine Verbindung der Formel (II):

$$H_2C{=}C(R^1)C(=O)-NH-Z-SO_3M \qquad (II),$$

wobei die Reste und Indices die folgenden Bedeutungen haben:

$R^1$ ist H oder Methyl;

Z ist eine zweiwertige verknüpfende Gruppe ausgewählt aus einer Bindung, $C_{1-10}$-Alkylen, Phenylen und $C_{1-10}$-Alkylphenylen; bevorzugt aus $C_{1-10}$-Alkylen;

und M ist ein oder mehrere Metalle, insbesondere ausgewählt aus Alkali- und/oder Erdalkalimetallsalzen, bevorzugt ausgewählt aus Natrium (Na), Kalium (K), Magnesium (Mg) und Calcium (Ca).

Bevorzugt ist Z eine Gruppe $-(CH_2)_n-$ mit n gleich 1 bis 12; $-CH(CH_3)-CH_2-$; $-CH(CH_3)-CH_2-CH_2-$; $-C(CH_3)_2-CH_2-$; $-C(CH_3)_2-CH_2-\ CH_2-$; $-C(CH_3)_2-CH_2-C(CH_3)_2)-CH_2-$ oder $-C(CH_3)_2-CH_2-\ CH_2-C(CH_3)_2)-CH_2-$.

Bevorzugt handelt es sich bei dem Monomer (b) um mindestens ein Monomer ausgewählt aus der Gruppe bestehend aus Vinylsulfonsäure, Allylsulfonsäure, 2-Acrylamido-2-methylpropan-sulfonsäure (AMPS), 2-Methacrylamido-2-methylpropansulfonsäure, 2-Acrylamidobutansulfonsäure, 3-Acrylamido-3-methyl-butansulfonsäure, 2-Acrylamido-2,4,4-trimethylpentansulfonsäure, Vinylphosphonsäure, Allylphosphonsäure, N-(Meth)acrylamidoalkylphosphonsäuren und (Meth)acryloyloxyalkylphosphonsäuren.

Besonders bevorzugt handelt es sich bei dem Monomer (b) um mindestens ein Monomer ausgewählt aus der Gruppe bestehend aus Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure und 2-Acrylamido-2,4,4-trimethylpentansulfonsäure.

Die genannten Säuren (Monomer (b)) schließen immer auch die entsprechenden Salze, insbesondere Ammonium, Alkali-und/oder Erdalkalimetallsalze, ein. Bevorzugt handelt es sich bei den oben genannten Monomeren (b) um die entsprechenden Ammonium- und/oder Metallsalze, bevorzugt um die entsprechenden Alkali- und/oder Erdalkalimetallsalze, besonders bevorzugt um Natrium- und/oder Kaliumsalze.

Insbesondere bevorzugt handelt es sich bei dem Monomer (b) um 2-Acrylamido-2-propan-sulfonsäure (AMPS) bzw. deren Salze, insbesondere um 2-Acrylamido-2-propansulfonsäure Natriumsalz (AMPS-Na) oder Monomer-Mischungen bestehend aus mindestens 50 Gew.-% AMPS bzw. deren Salze und mindestens einem weiteren Monomer (b).

Das mindestens eine Monomer (b) ist bevorzugt in einer Menge im Bereich von 1 bis 45 Gew.-%, bevorzugt von 5 bis 29,5 Gew.-%, insbesondere bevorzugt 8 bis 15 Gew.-%, bezogen auf die gesamte Menge der Monomere im Copolymer A, enthalten.

Monomer (c)

Das erfindungsgemäße Copolymer A umfasst mindestens ein ethylenisch ungesättigtes Monomer (c), welches mindestens eine Oxazolingruppe umfasst. Insbesondere handelt es sich bei Monomer (c) um ein monoethylenisch ungesättigtes, hydrophiles Monomer (c), welches mindestens eine Oxazolingruppe, insbesondere mindestens eine 2-Oxazolingruppe, umfasst (im Folgenden auch Oxazolin-Monomer genannt). Bevorzugt umfasst das Monomer (c) genau eine Oxazolingruppe, insbesondere genau eine 2-Oxazolingruppe.

Bei einem Oxazolin-Monomer handelt es sich um eine organische Verbindung enthaltend mindestens eine ethylenisch ungesättigte Gruppe und mindestens eine Oxazolingruppe. Im Sinne der vorliegenden Erfindung bezeichnet eine Oxazolingruppe eine heterozyklische Verbindung, welche einen fünfgliedrigen Ring umfassend genau ein Sauerstoffatom und genau ein Stickstoffatom umfasst. Insbesondere handelt es sich bei der Oxazolin-Gruppe um eine 2-Oxazolin-Gruppe, welche durch das folgende Strukturelement beschrieben werden kann.

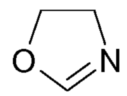

(III),

Bevorzugt handelt es sich bei dem Monomer (c) um eine Verbindung gemäß Formel (IV):

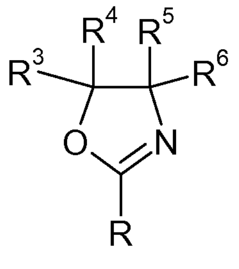

(IV),

wobei die Reste die folgenden Bedeutungen haben:

| | |
|---|---|
| R | ist ein $C_{2-20}$-Alkenylrest, umfassend mindestens eine ethylenisch ungesättigte Gruppe; |
| $R^3$, $R^4$, $R^5$, $R^6$ | sind unabhängig voneinander ausgewählt aus H, Halogen, $C_{1-20}$-Alkyl, $C_{2-20}$-Alkenyl, $C_{6-20}$-Aryl, $C_{7-32}$-Arylalkyl, $C_{1-20}$-Hydroxyalkyl, $C_{1-20}$-Aminoalkyl und $C_{1-20}$-Haloalkyl, bevorzugt ausgewählt aus H, Halogen und $C_{1-20}$-Alkyl. |

Eine ethylenisch ungesättigte Gruppe bezeichnet eine endständig C=C-Doppelbindung.

Alkyl bezeichnet einen univalenten Rest bestehend aus einer linearen, verzweigten oder cyclischen Kohlenwasserstoffgruppe, bevorzugt aus einer linearen oder verzweigten Kohlenwasserstoffkette, insbesondere umfassend 1 bis 20 Kohlenstoffatome, bevorzugt 1 bis 18 Kohlenstoffatome, besonders bevorzugt 1 bis 12 Kohlenstoffatome. Beispielsweise kann es sich bei dem Alkylrest um Methyl, Ethyl, n-Propyl oder iso-Propyl handeln.

Alkenyl bezeichnet einen univalenten Rest bestehend aus einer linearen oder verzweigten Kohlenwasserstoffkette, insbesondere umfassend 2 bis 20 Kohlenstoffatome, bevorzugt 2 bis 18 Kohlenstoffatome, besonders bevorzugt 2 bis 12 Kohlenstoffatome, welche eine oder mehrere C-C Doppelbindungen umfasst, wobei die C-C-Doppelbindungen innerhalb der Kohlenwasserstoffkette oder am Ende der Kohlenwasserstoffkette (endständig C=C-Doppelbindung) auftreten können. Beispielsweise kann es sich bei einem Alkenyl-Rest um einen Allyl-Rest handeln.

Aryl bezeichnet eine substituierte oder unsubstituierte aromatische Kohlenwasserstoff-Gruppe, insbesondere umfassend 6 bis 20 Kohlenstoffatome. Beispielsweise kann es sich bei dem Arylrest um eine Phenylgruppe handeln.

Arylalkyl bezeichnet einen univalenten Rest abgeleitet von einem linearen oder verzweigten Alkylrest, insbesondere umfassend 1 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch eine Arylgruppe, wobei die Arylgruppe eine substituierte oder unsubstituierte aromatische Kohlenwasserstoff-Gruppe, insbesondere umfassend 6 bis 14 Kohlenstoffatome, ist. Beispielsweise kann es sich bei der aromatische Kohlenwasserstoff-Gruppe um Phenyl handeln; beispielsweise kann es sich bei dem Arylalkyl-Rest um einen Benzyl-Rest handeln.

Halogen bezeichnet einen Substituenten ausgewählt aus Fluor, Chlor, Brom oder Iod, bevorzugt Chlor.

Haloalkyl bezeichnet einen univalenten Rest abgeleitet von einem linearen oder verzweigten Alkylrest, insbesondere umfassend 2 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch ein Halogenatom (-F, -Cl, -Br, -I, insbesondere Cl). Entsprechendes gilt für die Reste Hydroxyalkyl und Aminoalkyl.

Bevorzugt ist R ein $C_{1-10}$-Alkenylrest, bevorzugt ein $C_{1-6}$-Alkenylrest, umfassend mindestens eine ethylenisch ungesättigte Gruppe. In einer bevorzugten Ausführungsform umfasst der Rest R genau eine ethylenisch ungesättigte Gruppe. Der Rest R ist insbesondere ausgewählt aus Vinyl, Allyl, Isopropenyl (2-Propen-2-yl), 2-Propen-1-yl, 3-Buten-1-yl, oder 4-Buten-1-yl. Insbesondere bevorzugt ist R Vinyl oder Isopropenyl, besonders bevorzugt Isopropenyl.

Bevorzugt sind die Reste $R^3$, $R^4$, $R^5$ und $R^6$ unabhängig voneinander ausgewählt aus H, Halogen, $C_{1-10}$-Alkyl, $C_{6-12}$-Aryl, $C_{7-13}$-Arylalkyl, $C_{1-10}$-Alkoxy, $C_{1-10}$-Hydroxyalkyl, $C_{1-10}$-Aminoalkyl und $C_{1-10}$-Haloalkyl; insbesondere ausgewählt aus H und $C_{1-6}$-Alkyl, besonders bevorzugt aus H, Methyl, Ethyl, n-Propyl, iso-Propyl, n-Butyl, n-Pentyl und n-Hexyl, insbesondere ausgewählt aus H, Methyl und Ethyl.

In einer bevorzugten Ausführungsform handelt es sich mindestens zwei der Reste $R^3$, $R^4$, $R^5$ und $R^6$ um H. In einer bevorzugten Ausführungsform handelt es sich bei den Resten $R^3$ und $R^4$ um H. In einer bevorzugten Ausführungsform handelt es sich allen Resten $R^3$, $R^4$, $R^5$ und $R^6$ um H. In einer bevorzugten Ausführungsform handelt es sich mindestens zwei der Reste $R^3$, $R^4$, $R^5$ und $R^6$ um H.

In einer bevorzugten Ausführungsform sind die Reste $R^3$, $R^4$, $R^5$ und $R^6$ unabhängig voneinander ausgewählt aus H, Methyl und Ethyl und es handelt sich bei mindestens zwei der Reste $R^3$, $R^4$, $R^5$ und $R^6$ um H, bevorzugt handelt es sich bei den Resten $R^3$ und $R^4$ um H.

Insbesondere bevorzugt handelt es sich bei Monomer (c) um mindestens ein Monomer ausgewählt aus der Gruppe bestehend aus 2-Vinyl-2-oxazolin, 2-Vinyl-4-methyl-2-oxazolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-teramethyl-2-oxazolin, 2-Isopropenyl-2-oxazolin, 2-Isopropenyl-4-methyl-2-oxazolin, 2-Isopropenyl-5-methyl-2-oxazolin, 2-Isopropenyl-4-ethyl-2-oxazolin, 2-Isopropenyl-5-ethyl-2-oxazolin, 2-Isopropenyl-4,4-dimethyl-2-oxazolin, 2- Isopropenyl-5,5-dimethyl-2-oxazolin und 2- Isopropenyl-4,4,5,5-teramethyl-2-oxazolin. Besonders bevorzugt ist die Verwendung von 2-Vinyl-2-oxazolin und/oder 2-Isopropenyl-2-oxazolin, insbesondere bevorzugt von 2-Isopropenyl-2-oxazolin (iPOx).

Das mindestens eine Monomer (c) ist bevorzugt in einer Menge im Bereich von 1 bis 45 Gew.-%, bevorzugt von 10 bis 39,5 Gew.-%, insbesondere bevorzugt von 20 bis 35 Gew.-%, bezogen auf die gesamte Menge der Monomere im Copolymer A, enthalten.

Optionales Monomer (d)

Das erfindungsgemäße Copolymer A kann optional mindestens ein weiteres Monomere (d) und/oder Additive enthalten. Beispielsweise kann das Copolymer A neben den oben beschriebenen Monomeren (a), (b) und (c), optional weitere Monomere (d) enthalten, beispielsweise ausgewählt aus ungesättigten Nitrilen, z.B. Acrylnitril und Methacrylnitril; ungesättigten Amiden, z.B. (Meth)acrylamid, N-Methyl(meth)acrylamid, N,N'-Dimethyl(meth)acrylamid, N-Methylol(meth)acrylamid, N-Butyl(meth)acrylamid, N-Cyclohexyl(meth)acrylamid, N-Benzyl(meth)acrylamid; Vinylestern und-ethern, z.B. Vinylformiat, Vinylacetat, Vinylpropionat, Methylvinylether, Ethylvinylether, Hydroxyvinylethylether, Hydroxyvinylpropylether, Hydroxyvinylbutylether, und N-Vinylderivaten, z.B. N-Vinylformamid, N-Vinylacetamid, N-Vinylpyrrolidon, N-Vinylcaprolactam. Das optionale Monomer kann insbesondere ausgewählt sein aus (Meth)acrylamid, N-Vinylformamid und N-Vinylpyrrolidon.

Es ist auch möglich, dass als weitere Monomere (d) hydrophile, nicht ionische $C_{1-20}$-Alkyl(meth)acrylat-Derivate im Copolymer A enthalten sind, wobei es sich insbesondere um wasserlösliche Monomere im Sinne der vorliegenden Erfindung handeln kann. Insbesondere können als weitere Monomere $C_{1-20}$-Alkyl(meth)acrylat-Derivate ausgewählt aus der Gruppe bestehend aus 2-Hydroxyethyl(meth)acrylat, 2-Hydroxypropyl(meth)acrylat, 3-Hydroxypropyl-(meth)acrylat, 2-Hydroxybutyl(meth)acrylat, 4-Hydroxybutyl(meth)acrylat, Methoxypolyethylenglykol-acrylat, Ethylenglykolmethoxy(meth)acrylat, Ethylenglykol(meth)acrylat, Diethylenglykolmethoxy(meth)acrylat, Glycidyl(meth)acrylat und 2-Aminoethylacrylat eingesetzt werden.

Es ist auch möglich, dass als weitere Monomere hydrophile, saure Gruppen umfassende Monomere enthalten sind, wobei es sich insbesondere um wasserlösliche Monomere im Sinne der vorliegenden Erfindung handeln kann. Insbesondere handelt es sich in diesem Fall um saure Gruppen, welche deprotoniert oder bevorzugt vollständig deprotoniert vorliegen. Insbesondere können als weitere Monomere (d) Acrylsäure, Methacrylsäure, Crotonsäure, Itaconsäure, Maleinsäure und/oder Fumarsäure in Form ihrer Alkali-und/oder Erdalkalisalze eingesetzt werden.

Typischerweise ist das mindestens eine Monomer (d) in einer Menge im Bereich von 0 bis 10 Gew.-%, bevorzugt von 0 bis 5 Gew.-%, insbesondere bevorzugt von 0 bis 1 Gew.-%, insbesondere bevorzugt von 0,1 bis 1 Gew.-%, bezogen auf die gesamte Menge der Monomere im Copolymer A, enthalten.

Bei den oben genannten optionalen weiteren Monomeren (d) kann es sich um wasserlösliche Monomere im Sinne der vorliegenden Erfindung handeln. Erfindungsgemäß enthält dann das Copolymer A in der Summe, umfassend Monomer (b), Monomer (c) und optional weitere wasserlösliche Monomere, weniger als 50 Gew.-% wasserlösliche Monomere, bezogen auf die gesamte Menge der Monomere im Copolymer A.

In einer besonders bevorzugten Ausführungsform enthält das erfindungsgemäße Copolymer A ausschließlich die Monomere (b) und (c) als wasserlösliche Monomere im Sinne der vorliegenden Erfindung, wobei die Summe der Monomere (b) und (c) weniger als 50 Gew.-%, bezogen auf die gesamte Menge der Monomere im Copolymer A, beträgt.

In einer bevorzugten Ausführungsform enthält das erfindungsgemäße Copolymer A keine Monomere, welche eine Carboxygruppe (-COOH) in protonierter oder deprotonierter Form enthalten. In einer bevorzugten Ausführungsform enthält das erfindungsgemäße Copolymer A keine Monomere, welche eine saure Gruppe, z.B. -COOH, $-SO_3H$, $-PO_3H_2$, in protonierter Form enthalten. In einer bevorzugten Ausführungsform enthält das erfindungsgemäße Copolymer A keine Monomere, welche eine Carboxygruppe (-COOH) in protonierter Form enthalten. Typischerweise führt die Anwesenheit von sauren Gruppen in protonierter Form bei der Polymerisation des Copolymers A zu einer unerwünschten Reaktion (Nebenreaktion) mit den Oxazolingruppen und einer Vernetzung des Copolymers A.

Beispielsweise kann das Copolymer A als weiteres Additiv optional eine oder mehrere Verbindungen, beispielsweise Tenside und Radikalstarter, enthalten, welche bei der radikalischen Polymerisation (Herstellung des Copolymers A) typischerweise als Hilfsmittel eingesetzt werden. Typischerweise kann das Copolymer A optionale Additive in einer Menge von 0 bis 1 Gew.-%, bevorzugt 0 bis 0,1 Gew.-%, bevorzugt 0,01 bis 0,1 Gew.-% enthalten.

In einer bevorzugten Ausführungsform betrifft die Erfindung ein Copolymer A umfassend

50 bis 98 Gew.-%, bevorzugt 50,5 bis 85 Gew.-%, insbesondere bevorzugt 55 bis 72 Gew.-%, des mindestens einen Monomers (a);

1 bis 45 Gew.-%, bevorzugt 5 bis 29,5 Gew.-%, insbesondere bevorzugt 8 bis 15 Gew.-%, des mindestens einen Monomers (b);

1 bis 45 Gew.-%, bevorzugt 10 bis 39,5 Gew.-%, insbesondere bevorzugt 20 bis 35 Gew.-%, des mindestens eine Monomers (c);

0 bis 10 Gew.-%, bevorzugt 0 bis 5 Gew.-%, insbesondere bevorzugt 0 bis 1 Gew.-%, bevorzugt 0,1 bis 1 Gew.-%, des mindestens eines weiteren Monomers (d) und/oder Additivs;

wobei der Anteil der Monomere (b) und (c) in der Summe weniger als 50 Gew.-%, bevorzugt 2 bis 49,9 Gew.-%, bevorzugt 10 bis 49,5 Gew.-%, insbesondere bevorzugt 25 bis 49 Gew.-%, besonders bevorzugt 30 bis 45 Gew.-%, bezogen auf die gesamte Menge der Monomere im Copolymer A, beträgt.

Angaben in Gew.-%, welche die Monomere des erfindungsgemäßen Copolymers A betreffen, sind, soweit nichts anderes angegeben ist, auf die gesamte Menge aller Monomere im Copolymer A bezogen.

In einer besonders bevorzugten Ausführungsform betrifft die Erfindung ein Copolymer A umfassend:

> 50 bis 98 Gew.-%, bevorzugt 50,5 bis 85 Gew.-%, insbesondere bevorzugt 55 bis 72 Gew.-%, des mindestens einen Monomers (a), wobei es sich bei Monomer (a) um mindestens ein $C_{1-12}$-Alkyl(meth)acrylat handelt, bevorzugt um mindestens ein $C_{1-6}$-Alkyl(meth)acrylat ausgewählt aus Methylacrylat (MA), Methylmethacrylat (MMA), Ethylacrylat (EA), Ethylmethacrylat (EMA), n-Butylacrylat (n-BA) und n-Butylmethacrylat (n-BMA);

> 1 bis 45 Gew.-%, bevorzugt 5 bis 29,5 Gew.-%, insbesondere bevorzugt 8 bis 15 Gew.-%, des mindestens einen Monomers (b), wobei es sich bei Monomer (b) um ein monoethylenisch ungesättigtes Monomer (b) handelt, welches genau eine Sulfonsäuregruppe ($-SO_3H$) umfasst, bevorzugt handelt es sich bei Monomer (b) um 2-Acrylamido-2-methylpropansulfonsäure oder ein Alkali- und/oder Erdalkalimetallsalz von 2-Acrylamido-2-methylpropansulfonsäure, bevorzugt um 2-Acrylamido-2-methylpropansulfonsäure-Natriumsalz (AMPS-Na);

1 bis 45 Gew.-%, bevorzugt 10 bis 39,5 Gew.-%, insbesondere bevorzugt 20 bis 35 Gew.-%, des mindestens eine Monomers (c), wobei es sich bei Monomer (c) um mindestens ein Monomer handelt ausgewählt aus 2-Vinyl-2-oxazolin, 2-Vinyl-4-methyl-2-oxazolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-terametnyl-2-oxazolin, 2-Isopropenyl-2-oxazolin, 2-Isopropenyl-4-methyl-2-oxazolin, 2-Isopropenyl-5-methyl-2-oxazolin, 2-Isopropenyl-4-ethyl-2-oxazolin, 2-Isopropenyl-5-ethyl-2-oxazolin, 2-Isopropenyl-4,4-dimethyl-2-oxazolin, 2- Isopropenyl-5,5-dimethyl-2-oxazolin und 2- Isopropenyl-4,4,5,5-terametnyl-2-oxazolin, bevorzugt handelt es sich bei Monomer (c) um 2-Isopropenyl-2-oxazolin (iPOx);

0 bis 10 Gew.-%, bevorzugt 0 bis 5 Gew.-%, insbesondere bevorzugt 0 bis 1 Gew.-%, bevorzugt 0,1 bis 1 Gew.-%, des mindestens einen weiteren Monomers (d) und/oder Additivs,

wobei der Anteil der Monomere (b) und (c) in der Summe weniger als 50 Gew.-%, bevorzugt 2 bis 49,9 Gew.-%, bevorzugt 10 bis 49,5 Gew.-%, insbesondere bevorzugt 25 bis 49 Gew.-%, besonders bevorzugt 30 bis 45 Gew.-%, bezogen auf die gesamte Menge der Monomere im Copolymer A, beträgt.

In einer besonders bevorzugten Ausführungsform betrifft die Erfindung ein Copolymer A umfassend:

50,5 bis 85 Gew.-%, insbesondere bevorzugt 55 bis 72 Gew.-%, mindestens ein $C_{1-12}$-Alkyl(meth)acrylats ausgewählt aus Methylacrylat, Methylmethacrylat, Ethylacrylat, Ethylmethacrylat, n-Butylacrylat und n-Butylmethacrylat, als Monomer (a);

5 bis 15 Gew.-%, bevorzugt 8 bis 13 Gew.-%, 2-Acrylamido-2-methylpropansulfonsäure-Natriumsalz (AMPS-Na) als Monomer (b);

10 bis 34,5 Gew.-%, bevorzugt 20 bis 32 Gew.-%, Isopropenyloxazolin (iPOx) als Monomer (c);

0 bis 1 Gew.-%, mindestens eines weiteren Monomers (d) und/oder Additivs,

wobei der Anteil der Monomere (b) und (c) in der Summe weniger als 50 Gew.-%, bevorzugt 2 bis 49,9 Gew.-%, bevorzugt 10 bis 49,5 Gew.-%, insbesondere bevorzugt 25 bis 49 Gew.-%, besonders bevorzugt 30 bis 45 Gew.-%, bezogen auf die gesamte Menge der Monomere im Copolymer A, beträgt.

Die vorliegende Erfindung betrifft zudem ein Verfahren zur Herstellung des oben beschriebenen Copolymers A, wobei

a) mindestens ein Monomer (a) ausgewählt aus der Gruppe bestehend aus $C_{1-20}$-Alkyl(meth)acrylaten und $C_{8-20}$-Vinylaromaten;
b) mindestens ein ethylenisch ungesättigtes Monomer (b), welches mindestens eine Sulfonsäuregruppe ($-SO_3M$) umfasst;
c) mindestens ein ethylenisch ungesättigtes Monomer (c), welches mindestens eine Oxazolingruppe umfasst;
d) und optional mindestens ein weiteres Monomer

polymerisiert werden. Bevorzugt umfasst das Verfahren ausschließlich den Einsatz der Monomere (a), (b) und (c), d.h. es werden keine optionalen Monomere (d) polymerisiert.

In einer bevorzugten Ausführungsform wird eine Monomer-Mischung enthaltend mindestens ein Monomer (a), mindestens ein Monomer (b), mindestens ein Monomer (c) und optional ein oder mehrere weitere Monomere (d), polymerisiert. Bevorzugt handelt es sich bei der Monomer-Mischung um eine Lösung der oben genannten Monomere (a), (b), (c) und optional (d) in Wasser, einem polaren organischen Lösungsmittel oder Mischungen davon. Geeignete polare Lösungsmittel werden unten beschrieben.

In einer bevorzugten Ausführungsform werden die Monomer (a), (b), (c) und optional (d) radikalisch polymerisiert. Die erfindungsgemäßen Copolymere A können nach den bekannten Methoden der radikalische Polymerisation hergestellt werden, beispielsweise durch Substanz-, Lösungs-, Gel-, Emulsions-, Dispersions- oder Suspensionspolymerisation.

Die radikalische Polymerisation (Herstellung des Copolymers A) erfolgt typischerweise bei Temperaturen im Bereich von 0 bis 170 °C, bevorzugt 20 bis 150 °C, besonders bevorzugt 50 bis 100 °C.

In einer bevorzugten Ausführungsform werden die Monomer (a), (b), (c) und optional (d) radikalisch polymerisiert, wobei die radikalische Polymerisation als Lösungspolymerisation, insbesondere bevorzugt als Lösungspolymerisation in einem Gemisch aus Wasser und einem polaren, organischen Lösungsmittel, durchgeführt wird.

Bevorzugt werden die Monomer (a), (b), (c) und optional (d) in einer radikalische Lösungspolymerisation polymerisiert, wobei eine Monomer-Mischung polymerisiert wird, welche ein Lösungsmittel, die Monomer (a), (b), (c) und optional (d), optional ein oder mehrere Initiatoren (Radikalstarter) und optional weitere Additive enthält.

Als Lösungsmittel enthält die Monomer-Mischung bevorzugt eine Mischung aus Wasser und einem polaren organischen Lösungsmittel. Bei dem polaren organischen Lösungsmittel handelt es sich typischerweise um ein oder mehrere geeigneten mit Wasser mischbaren organischen Lösungsmitteln. Der Anteil von Wasser im Lösungsmittel beträgt im Regelfalle 0 bis 70 Gew.-%, bevorzugt 10 bis 60 Gew.-% und besonders bevorzugt 30 bis 50 Gew.-%, bezogen auf das gesamte Lösungsmittel.

Als organische Lösungsmittel können bekannte polare, mit Wasser mischbare Lösungsmittel, wie Alkohole, Ester, Ether oder Dimethylsulfoxid (DMSO) eingesetzt werden. Als organische Lösungsmittel können insbesondere mit Wasser mischbare Alkohole wie Methanol, Ethanol, Propanol oder Isopropanol eingesetzt werden.

Als polares, organisches Lösungsmittel kann insbesondere mindestens eine Verbindung ausgewählt aus der Gruppe bestehend aus Methanol, Ethanol, Isopropanol und Essigester, bevorzugt aus Methanol, Ethanol, n-Propanol und Isopropanol, eingesetzt werden.

Bevorzugt wird als Lösungsmittel eine Mischung aus Wasser und mindestens einem Alkohol ausgewählt aus Methanol, Ethanol n-Propanol und Isopropanol, bevorzugt Isopropanol, im Gewichtsverhältnis von 1:2 bis 2:1, bevorzugt etwa 1:1, eingesetzt.

Bevorzugt umfasst das Verfahren zur Herstellung des erfindungsgemäßen Copolymers A die radikalische Polymerisation der Monomern (a), (b), (c) und optional (d) unter Verwendung eines bekannten Initiators (Radikalstarter) für die radikalische Polymerisation. Typischerweise kann als Initiator mindestens eine Verbindung ausgewählt aus Peroxidverbindungen, wie Hydroperoxiden, Perestern und Persulfaten, Azo-Verbindungen, substituierten Ethanen (z.B. Benzopinacol), Redox-Systemen aus anorganischen und organischen Komponenten, Hitze, UV- oder andere energiereiche Strahlung, eingesetzt werden.

Typische Peroxid-Initiatoren sind beispielsweise Acetylcyclohexanesulfonylperoxid, Diisopropy-Iperoxydicarbonat, t-Amylperneodecanoat, t-Butylperneodecanoat, t-Butylperpivalat, t-Amylperpivalat, bis-(2,4-Dichlorobenzoyl)peroxid, Di-isononanoylperoxid, Didecanoylperoxid, Dioctanoylperoxid, Dilauroylperoxid, bis(2-Methylbenzoyl)peroxid, Disuccinoylperoxid, Diacetylperoxid, Dibenzoylperoxid, t-Butyl-per-2-ethylhexanoat, t-Butyl-2-ethylhexanoat, bis(4-chlorobenzoyl)peroxid, t-Butyl perisobutyrat, t-Butylpermaleat, 1,1-bis(t-butylperoxy)-3,5,5-trimethylcyclohexan, 1,1-bis(t-Butylperoxy)cyclohexan, t-Butylperoxyisopropylcarbonat, t-Butyl perisononanoat, t-Butylperacetat, t-Amyl perbenzoat, t-Butylperbenzoat, 2,2-bis(t-Butylperoxy)butan (di-t-Butylperoxid), 2,2-bis-10-(t-butylperoxy)propan, Dicumylperoxid, 2,5-Dimethyl-2,5-bis(t-butylperoxy)-hexan, 3-(t-butylperoxy)-3-phenylphthalid, Di(t-amyl)peroxid, α,α'-Bis(t-butylperoxyisopropyl)benzene, 3,5-Bis(t-butylperoxy)-3,5-dimethyl-1,2-dioxolan, di(t-Butyl)peroxid, 2,5-Dimethyl-2,5-bis(t-butylperoxy)hexyn, 3,3,6,6,9,9-Hexamethyl-1,2,4,5-tetraoxacyclononan, p-Menthanhydroperoxid, Pinanhydroperoxid, Diisopropylbenzen, Mono-α-hydroperoxid, Cumenhydroperoxid, Succinylperoxid, t-Butylhydroperoxid oder Wasserstoffperoxid.

Typische Azo-Initiatoren sind beispielsweise 4,4'-Azobis-4-cyanovaleriansäure (ACVA), 2,2'-Azobis(2-methylpropionamidin)-dihydrochlorid, 2,2'-Azobis(2-methylpropionitril) (AIBN), 2,2'-Azobis(2-methylbutannitril), 2,2'-Azobis(2,4-dimethylvaleronitril), 1,1'-Azobis(cyanocyclohexan), 1,1'-Azobis(N,N-dimethylformamid), 2,2'-Azobis(2-methylbutyronitril), 2,2'-Azobis(4-methoxy-2,4-dimethylvaleronitril), 2,2'-Azobis(2,4,4-trimethylpentan), 2,2'-Azobisisobutyronitril, 2,2'-Azobis(2-methylbutyronitril), 2,2'-Azobis(2,4-dimethylvaleronitril), 2,2'-Azobis(4-methoxy-2,4-dimethylvaleronitril), 1,1'-Azobis(1-cyclohexanecarbonitril), 2,2'-Azobis(isobutyramid)dihydrat, 2-Phenylazo-2,4-dimethyl-4-methoxyvaleronitril,Dimethyl-2,2'-azobisisobutyrat, 2-(Carbamoyl-azo)isobutyronitril, 2,2'-Azobis(2,4,4-trimethylpentan), 2,2'-Azobis(2-methylpropan), 2,2'-Azobis(N,N'-dimethylenisobutyramidin), 2,2'-Azobis(N,N'-dimethylenisobutyramidin)-hydrochlorid, 2,2'-Azobis(2-amidinopropan), 2,2'-Azobis(2-amidinopropan)hydrochlorid, 2,2'-Azobis(2-methyl-N-[1,1-bis(hydroxymethyl)ethyl]propionamid), Azobis(2-amidopropan)-dihydrochlorid oder 2,2'-Azobis(2-methyl-N-[1,1-bis(hydroxymethyl)-2-hydroxyethyl]-propionamid).

Typische Redox-Initatoren sind beispielsweise Mischungen aus einem Oxidationsmittel, wie Wasserstoffperoxid, Peroxodisulfaten oder oben genannten Peroxid-Verbindungen, und einem Reduktionsmittel, wie Eisen(II)-Salzen, Silber(I)-Salzen, Cobalt(II)-Salzen, Sulfiten, Hydrogensulfiten oder Thiosulfaten. Typische Redox-Systemen aus anorganischen und organischen Komponenten sind Kombinationen von Wasserstoffperoxid oder Derivaten davon und einer reduzierenden Komponente, z.B. Natriumsulfit, Natriumbisulfit, Natriumformaldehydsulfoxylat und -hydrazin, Ascorbinsäure oder Dinatrium-2-dihydroxy-2-sulfinatoacetat.

Bevorzugt wird als Initiator ein Azo-Initiator eingesetzt, insbesondere ausgewählt aus 2,2'-Azobis(2-methylbutyronitril), 2,2'-Azobis(2-methylpropionamidin)-dihydrochlorid, und 2,2'-Azobis(N,N'-dimethylenisobutyramidin)-dihydrochlorid.

Typischerweise wird der Initiator in einer Menge im Bereich von 0,5 bis 5 Gew.-%, bevorzugt von 1 bis 4 Gew.-%, bezogen auf die Monomere, eingesetzt.

Bevorzugt erfolgt die radikalische Polymerisation der Monomere (a), (b), (c) und optional (d) als Lösungspolymerisation, wobei der pH- Wert der Lösung im Bereich von 5 bis 8, bevorzugt 6 bis 8 liegt. Saure oder basische Monomere können vor der Polymerisation ganz oder teilweise neutralisiert werden. Bevorzugt liegen saure Gruppen, z.B. -COOH, $-SO_3H$, $-PO_3H_2$, vollständig in deprotonierter Form vor. Typischerweise führt die Anwesenheit von sauren Gruppen in protonierter Form bei der Polymerisation des Copolymers A zu einer unerwünschten Reaktion (Nebenreaktion) mit den Oxazolingruppen.
Das monoethylenisch ungesättigte, hydrophile Monomer (b), welches mindestens eine Sulfonsäuregruppe ($-SO_3M$) umfasst, liegt bevorzugt in der neutralisierten Form, insbesondere in Form der Alkalimetallsalze, vor.
In einer bevorzugten Ausführungsform wird eine Monomer-Mischung enthaltend mindestens ein Monomer (a), mindestens ein Monomer (b), mindestens ein Monomer (c) und optional ein oder mehrere weitere Monomere (d), polymerisiert, wobei die Monomer-Mischung die folgenden Komponenten enthält:

7 bis 15 Gew.-%, bevorzugt 8 bis10 Gew.-%, bezogen auf die gesamte Monomer-Mischung, des mindestens einen Monomers (a);

0,5 bis 10 Gew.-%, bevorzugt 1 bis 5 Gew.-%, bezogen auf die gesamte Monomer-Mischung, des mindestens einen Monomers (b);

0,5 bis 10 Gew.-%, bevorzugt 2 bis 8 Gew.-%, insbesondere bevorzugt 2,5 bis 3,4 Gew.-%, bezogen auf die gesamte Monomer-Mischung, des mindestens einen Monomers (c),

0 bis 5 Gew.-%, bevorzugt 0 bis 1 Gew.-%, bezogen auf die gesamte Monomer-Mischung, des mindestens einen weiteren Monomers und/oder Additivs,

0,001 bis 2 Gew.-%, bevorzugt 0,01 bis 1 Gew.-%, bezogen auf die gesamte Monomer-Mischung, mindestens eines Initiators,

58 bis 91,991 Gew.-%, bevorzugt 75 bis 88,99 Gew.-%, bezogen auf die gesamte Monomer-Mischung, mindestens eines Lösungsmittels, wobei das Lösungsmittel ausgewählt ist aus einem polaren Lösungsmittel, z.B. ausgewählt aus der Gruppe bestehend aus Methanol, Ethanol n-Propanol und Isopropanol, und Mischungen aus einem polaren Lösungsmittel und Wasser.

Für die genannten Komponenten gelten die oben, im Zusammenhang mit dem Copolymer A und dem Verfahren zu dessen Herstellung, beschriebenen bevorzugten Ausführungsformen.
Das Copolymer A kann typischerweise mittels üblicherer Verfahren aus der erhaltenen Produktmischung isoliert werden, z.B. mittels Fällung oder Destillation. Es ist aber auch möglich die Copolymere A mittels Wasserdampfdestillation in Wasser zu überführen und als wässrige Lösung als Vernetzer einzusetzen.
Weiterhin betrifft die vorliegende Erfindung die Verwendung des oben beschriebenen erfindungsgemäßen Copolymers A als Vernetzer, insbesondere zur Vernetzung eines polyfunktionellen Polymers P umfassend mindestens zwei funktionelle Gruppen ausgewählt aus Carboxygruppen (-COOH), Phosphorsäuregruppen ($-OP(OH)_3$)), phenolischen Hydroxygruppen und aromatischen Thiolgruppen, bevorzugt ausgewählt aus Carboxygruppen (-COOH). Bevorzugt betrifft die vorliegende Erfindung die Verwendung des oben beschriebenen erfindungsgemäßen Copolymers A als Vernetzer für Polycarbonsäure-Polymere.
In Bezug auf die erfindungsgemäße Verwendung des Copolymeren A gelten die oben beschriebenen bevorzugten Ausführungsformen des Copolymers A.
Der Ausdruck phenolische Hydroxygruppen bezeichnet im Sinne der Erfindung Hydroxygruppen (-OH), welche direkt an einen aromatischen Ring, insbesondere einen Benzol-Ring, gebunden sind.
Der Ausdruck aromatische Thiolgruppen bezeichnet im Sinne der Erfindung Thiolgruppen (-SH), welche direkt an einen aromatischen Ring, insbesondere einen Benzol-Ring, gebunden sind.
Der Ausdruck Polycarbonsäure-Polymere bezeichnet im Sinne der vorliegenden Erfindung Polymere, welche mindestens zwei freie Carboxygruppen (-COOH) umfassen.
Bei dem Polycarbonsäure-Polymer kann es sich beispielsweise um ein Polymer oder Copolymer handeln, welches (Meth)acrylsäure und optional ein oder mehrere weitere monoethylenisch ungestättigte Monomere umfasst. Insbesondere kann es sich bei dem Polycarbonsäure-Polymer um Poly(meth)acrylsäure und/oder Copolymere aus (Meth)acrylsäure und mindestens einem weiteren Monomer, ausgewählt aus der Gruppe bestehend aus $C_{1-20}$-Alkyl(meth)-acrylaten, insbesondere aus $C_{1-12}$-Alkyl(meth)acrylaten; $C_{8-20}$ Vinylaromaten, insbesondere aus $C_{8-10}$ Vinylaromaten; ungesättigten Nitrilen, z.B. (Meth)acrylnitril; ungesättigten Amiden, z.B. (Meth)acrylamid, N-Methyl(meth)acrylamid, N,N'-Dimethyl(meth)acrylamid, N-Methylol(meth)-acrylamid, N-Butyl(meth)acrylamid, N-Cyclohexyl(meth)acrylamid, N-Benzyl(meth)acrylamid; Vinylestern; z.B. Vinylformiat, Vinylacetat, Vinylpropionat; Vinylethern, z.B. Methylvinylether, Ethylvinylether, Hydroxyvinylethylether, Hydroxyvinylpropylether, Hydroxyvinylbutylether, und N-Vinylderivate, z.B. N-Vinylformamid, N-Vinylacetamid, N-Vinylpyrrolidon, N-Vinylcaprolactam, handeln.

Insbesondere umfasst das Polycarbonsäure-Polymer (Meth)acrylsäure und mindestens ein weiteres Monomer, ausgewählt aus der Gruppe bestehend $C_{1-12}$-Alkyl(meth)acrylaten, Styrol, α-Methylstyrol, (Meth)acrylamid, N-Methyl(meth)acrylamid, N,N'-Dimethyl(meth)acrylamid, N-Methylol(meth)acrylamid, N-Butyl(meth)acrylamid, N-Cyclohexyl(meth)acrylamid und N-Benzyl(meth)acrylamid.

In einer bevorzugten Ausführungsform handelt es sich bei dem Polycarbonsäure-Polymer um eine Polycarbonsäure-Polymerdispersion umfassend mindestens zwei Carboxygruppen (-COOH). Insbesondere handelt es sich bei der Polycarbonsäure-Polymerdispersion um das Produkt einer Emulsionspolymerisation, auch als Latex bezeichnet. Bevorzugt handelt es sich bei dem Polycarbonsäure-Polymer um eine Polymerdispersion (Latex) enthaltend (Meth)acrylsäure und/oder Itaconsäure und mindestens ein weiteres Monomer, ausgewählt aus der Gruppe bestehend aus $C_{1-20}$-Alkyl(meth)-acrylaten, insbesondere aus $C_{1-12}$-Alkyl(meth)acrylaten; $C_{8-20}$ Vinylaromaten, insbesondere aus $C_{8-10}$ Vinylaromaten; ungesättigten Nitrilen, z.B. (Meth)acrylnitril; ungesättigten Amiden, z.B. (Meth)acrylamid, N-Methyl(meth)acrylamid, N,N'-Dimethyl(meth)acrylamid, N-Methylol(meth)-acrylamid, N-Butyl(meth)acrylamid, N-Cyclohexyl(meth)acrylamid, N-Benzyl(meth)acrylamid; Vinylestern; z.B. Vinylformiat, Vinylacetat, Vinylpropionat; Vinylethern, z.B. Methylvinylether, Ethylvinylether, Hydroxyvinylethylether, Hydroxyvinylpropylether, Hydroxyvinylbutylether, und N-Vinylderivate, z.B. N-Vinylformamid, N-Vinylacetamid, N-Vinylpyrrolidon, N-Vinylcaprolactam.

Bevorzugt handelt es sich bei dem Polycarbonsäure-Polymer um eine Polymerdispersion (Latex) enthaltend (Meth)acrylsäure und/oder Itaconsäure und mindestens ein weiteres Monomer, ausgewählt aus der Gruppe bestehend aus Styrol, Methyl(meth)acrylat, n-Butyl(meth)acrylate, Ethylhexyl-(meth)acrylat und (Meth)acrylamid.

Typischerweise enthält das Polycarbonsäure-Polymer 0,1 bis 10 Gew.-%, bevorzugt 0,1 bis 5 Gew.-% (Meth)acrylsäure und/oder Itaconsäure und 50 bis 99,9 Gew.-%, bevorzugt 50 bis 99,9 Gew.-% mindestens eines weiteren oben beschriebenen Monomers.

Insbesondere kann es sich um eine Polymerdispersion (Latex) handeln, welche ausgehend von einem Polystyrol-Saatlatex hergestellt wurde.

Die Durchführung der radikalischen Emulsionspolymerisation von ethylenisch ungesättigten Monomeren ist dem Fachmann bekannt und vielfach im Stand der Technik beschrieben. Typischerweise weist die Polymerdispersion (Latex) einen Feststoffgehalt im Bereich von 20 bis 60 Gew.-%, bevorzugt 40 bis 60 Gew.-% auf. Typischerweise weist die Polymerdispersion (Latex) eine Teilchengröße im Bereich von 50 bis 500 nm, bevorzugt von 100 bis 200 nm, auf. Typischerweise weist die Polymerdispersion (Latex) eine Glastemperatur im Bereich von -40 bis 100 °C, bevorzugt von -10 bis 40 °C auf.

Typischerweise weist die Polymerdispersion (Latex) eine Säurezahl im Bereich von 0,2 bis 20 Gew.-% auf. Als Säurezahl bezeichnet man typischerweise das Gewichtsverhältnis der Monomere, welche eine Säuregruppe aufweisen bezogen auf die gesamten Monomere.

Typischerweise können als Polycarbonsäure-Polymere kommerziell erhältliche Latex-Dispersionen, beispielsweise Dispersionen aus der Acronal®-Produktserie der BASF SE, eingesetzt werden.

Insbesondere betrifft die Verwendung des erfindungsgemäßen Copolymers A die Verwendung als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifizierer oder zur Modifizierung von mineralischen Bindemitteln und Kunststoffen. Insbesondere betrifft die Verwendung des erfindungsgemäßen Copolymers A die Verwendung als Vernetzer in Beschichtungs-Zusammensetzungen und/oder Binder-Zusammensetzungen, welche beispielsweise bei der Herstellung von Papier, Karton oder Hartspannplatte verwendet werden.

Durch die Verwendung des erfindungsgemäßen Copolymers A können beispielsweise die Anbindung und Vernetzung von Cellulosefasern, beispielsweise in Papierprodukten, verbessert werden.

Die Erfindung betrifft zudem ein Verfahren zur Vernetzung eines polyfunktionellen Polymers P umfassend mindestens zwei funktionelle Gruppen ausgewählt aus Carboxygruppen, Phosphorsäuregruppen, phenolischen Hydroxygruppen und aromatischen Thiol-Gruppen, wobei zu dem polyfunktionellen Polymer P mindestens ein erfindungsgemäßes Copolymer A zugegeben wird. Die Vernetzung kann bei Raumtemperatur erfolgen. Es ist auch möglich die Mischung enthaltend das Polymer P und das erfindungsgemäße Copolymer A auf Temperaturen von 60 bis 200 °C, bevorzugt 80 bis 150 °C, zu erwärmen.

Typischerweise erfolgt die Vernetzung durch das Verdunsten und/oder Verdampfen einer in der Mischung enthaltenen flüchtigen, basischen Verbindung, wobei es zu einer Erniedrigung des pH-Wertes und einer Protonierung der oben beschriebenen funktionellen Gruppen des polyfunktionellen Polymers P, z.B. Carboxygruppen (-COOH), Phosphorsäuregruppen ($-OP(OH)_3$)), phenolischen Hydroxygruppen und aromatischen Thiolgruppen, kommt. Die protonierten Gruppen können dann typischerweise mit den Oxazolingruppen des erfindungsgemäßen Copolymers A unter Ringöffnung reagieren, was zur gewünschten Vernetzung führt.

Für das erfindungsgemäße Verfahren zur Vernetzung gelten die oben beschriebenen bevorzugten Ausführungsformen des Copolymers A und des polyfunktionellen Polymers P entsprechend. Für das erfindungsgemäße Verfahren zur Vernetzung gelten ebenso die im Folgenden beschriebenen Ausführungsformen.

Weiterhin betrifft die vorliegende Erfindung eine Zusammensetzung, insbesondere eine Beschichtungs-Zusammensetzung und/oder eine Binder-Zusammensetzungen, enthaltend

i) mindestens ein oben beschriebenes Copolymer A; umfassend:

a) mindestens ein Monomer (a) ausgewählt aus der Gruppe bestehend aus $C_{1-20}$-Alkyl(meth)acrylaten und $C_{8-20}$-Vinylaromaten;
b) mindestens ein ethylenisch ungesättigtes Monomer (b), welches mindestens eine Sulfonsäuregruppe ($-SO_3M$) umfasst;
c) mindestens ein ethylenisch ungesättigtes Monomer (c), welches mindestens eine Oxazolingruppe umfasst;
d) und optional mindestens ein weiteres Monomer (d) und/oder Additiv;

wobei der Anteil der Monomere (b) und (c) in der Summe weniger als 50 Gew.-%, bezogen auf die gesamte Menge der Monomere im Copolymer A, beträgt,
und wobei es sich bei dem Copolymer A um ein wasserlösliches Polymer handelt, wobei wasserlöslich eine Löslichkeit in Wasser von mindestens 100 g/l umfasst;
ii) mindestens ein polyfunktionelles Polymer P umfassend mindestens zwei funktionelle Gruppen ausgewählt aus Carboxygruppen (-COOH), Phosphorsäuregruppen ($-OP(OH)_3$)), phenolischen Hydroxygruppen und aromatischen Thiolgruppen, bevorzugt ausgewählt aus Carboxygruppen (-COOH), und
iii) mindestens eine flüchtige, basische Verbindung, insbesondere Ammoniak.

Für das Copolymer A und das polyfunktionelle Polymer P gelten die oben beschriebenen bevorzugten Ausführungsformen entsprechend.

Insbesondere betrifft die vorliegende Erfindung eine Zusammensetzung, insbesondere eine Beschichtungs-Zusammensetzung und/oder eine Binder-Zusammensetzung, enthaltend

i) mindestens ein oben beschriebenes Copolymer A,
ii) mindestens ein polyfunktionelles Polymer P, wobei es sich um einen Latex handelt, welcher (Meth)acrylsäure und mindestens ein weiteres Monomer, ausgewählt aus Styrol, $\alpha$-Methylstyrol, $C_{1-12}$-Alkyl(meth)acrylat, (Meth)acrylamid und (Meth)acrylnitril umfasst, und
iii) mindestens eine flüchtige, basische Verbindung, insbesondere Ammoniak

Insbesondere betrifft die Erfindung eine Zusammensetzung enthaltend

i) 10 bis 80 Gew.-%, bevorzugt 20 bis 50 Gew.-%, bezogen auf die gesamte Zusammensetzung, des mindestens einen oben beschriebenen Copolymers A;
ii) 10 bis 80 Gew.-%, bevorzugt 20 bis 50 Gew.-%, bezogen auf die gesamte Zusammensetzung, des mindestens einen polyfunktionelles Polymers P;
iii) 0,1 bis 20 Gew.-%, bevorzugt 1 bis 10 Gew.-%, bezogen auf die gesamte Zusammensetzung, mindestens eine flüchtige, basische Verbindung, insbesondere Ammoniak,
iv) 0 bis 79,9 Gew.-%, bevorzugt 0 bis 60 Gew.-%, bezogen auf die gesamte Zusammensetzung, mindestens eines Lösungsmittels, insbesondere Wasser und/oder ein polares organisches Lösungsmittel, insbesondere ausgewählt aus Methanol, Ethanol, Isopropanol und Essigester.

Die Erfindung betrifft zudem ein Verfahren zur Vernetzung, wobei die oben beschriebenen Zusammensetzungen bei Raumtemperatur stehen gelassen werden und/oder auf Temperaturen von 60 bis 200 °C, bevorzugt 80 bis 150 °C, erwärmt werden.

Typischerweise erfolgt die Vernetzung der oben beschriebenen Zusammensetzung durch das Verdunsten und/oder Verdampfen der mindestens einen flüchtigen, basischen Verbindung, wobei es zu einer Erniedrigung des pH-Wertes und einer Protonierung der oben beschriebenen funktionellen Gruppen des polyfunktionellen Polymers P, z.B. Carboxygruppen (-COOH), Phosphorsäuregruppen ($-OP(OH)_3$)), phenolischen Hydroxygruppen und aromatischen Thiolgruppen, kommt. Die protonierten Gruppen können dann typischerweise mit den Oxazolingruppen des erfindungsgemäßen Copolymers A unter Ringöffnung reagieren, was zur gewünschten Vernetzung führt.

Für das erfindungsgemäße Verfahren zur Vernetzung gelten die oben beschriebenen bevorzugten Ausführungsformen des Copolymers A und des polyfunktionellen Polymers P entsprechend.

Zudem betrifft die vorliegende Erfindung die Verwendung der oben beschriebenen Zusammensetzung enthaltend

i) mindestens ein oben beschriebenes erfindungsgemäßes Copolymer A,
ii) mindestens ein polyfunktionelles Polymer P umfassend mindestens zwei funktionelle Gruppen ausgewählt aus Carboxygruppen (-COOH), Phosphorsäuregruppen (-OP(OH)$_3$)), phenolischen Hydroxygruppen und aromatischen Thiolgruppen, bevorzugt ausgewählt aus Carboxygruppen (-COOH), und
iii) mindestens eine flüchtige, basische Verbindung, insbesondere Ammoniak,

als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil-oder Lederhilfsmitteln und Schlagzähmodifizierer oder zur Modifizierung von mineralischen Bindemitteln und Kunststoffen.
Es gelten die oben beschriebenen bevorzugten Ausführungsformen.
Die Erfindung wird durch die nachfolgenden Beispiele und Ansprüche näher erläutert.
Es werden die folgenden Abkürzungen verwendet:

| | |
|---|---|
| AMPS-Na | 2-Acrylamido-2-propansulfonsäure-Natriumsalz |
| iPOx | Isopropenyloxazolin |
| IT | Innentemperatur |
| MMA | Methylmethacrylat |
| nBA | n-Butylacrylat |
| MPEG MA | Methoxy-poly(ethylenglykol)-methacrylat |
| VE-Wasser | vollentsalztes Wasser |
| IPA | Isopropanol |
| h | Stunde |

**Beispiel 1** - Herstellung von AMPS-Copolymeren

In einem 2 l Glasreaktor mit Anker-Rührer, Thermoelement und Rückflusskühler wurde die Vorlage, welche aus 635 g VE-Wasser, 16 g eines Azo-Radikalstarters (Wako V 59, 2,2'-Azobis(2-methylbutyronitril) und 680 g Isopropanol bestand, unter leichtem N2-Strom auf 70°C IT aufgeheizt. Bei erreichter IT wurden die folgenden Zuläufe gestartet:

| | |
|---|---|
| Zulauf 1: | 63 g 2-Acrylamido-2-propansulfonsäure-Natriumsalz (AMPS-Na, 50 %ige Lösung in Wasser), 10 g VE Wasser, |
| Zulauf 2: | 88 g n-Butylacrylat und 104 g Methylmethacrylat |
| Zulauf 3: | 96 g Isopropenyloxazolin. |

Die Zuläufe wurden über 2 h zudosiert. Nach Ende der Zuläufe wurde 9 Stunden bei 70 °C nachpolymerisiert. Nach anschließender Wasserdampfdestillation erhielt man eine opake Polymerlösung (Copolymer P1)
In Analogie zu der oben beschriebenen Versuchsdurchführung wurden drei weitere Copolymere P2, P3 und P4 hergestellt. Die Reaktionsansätze zur Herstellung der Copolymere P1 bis P4 sind in der folgenden Tabelle 1 zusammengefasst.

Tabelle 1: Herstellung der AMPS Copolymere

| Co-polymer | nBA [g] | MMA [g] | AMPS-Na [g] | iPOx [g] | Initator [g] | VE Wasser [g] | IPA [g] | nBA + MMA [Gew.-%] | iPOx + AMPS-Na [Gew.-%] |
|---|---|---|---|---|---|---|---|---|---|
| P1 | 88 | 104 | 32 | 96 | 16 | 645 | 680 | 60,0 | 40,0 |
| P2 | 0 | 150 | 124 | 36 | 2,5 | 13,6 | 580 | 48,4 | 51,6 |
| P3 | 0 | 30 | 18 | 12 | 3 | 270 | 270 | 50,0 | 50,0 |
| P4 | 104 | 120 | 32 | 64 | 16 | 645 | 680 | 70,0 | 30,0 |

Bei den Copolymeren P1 und P4 handelt es sich um erfindungsgemäße Copolymere, die Copolymere P2 und P3 sind Vergleichsbeispiele.

**Beispiel 2** (Vergleichsbeispiel) - Herstellung eines Polyethylenglykol enthaltenden Copolymers (Polymer P5)

In einem 2 l Glasreaktor mit Ankerrührer, Thermoelement und Rückflusskühler wurde die Vorlage, welche aus 1512 g VE-Wasser und 18 g eines Azo-Radikalstarters (Wako V 50, 2,2'-Azobis(2-methylpropionamidin)dihydrochlorid) bestand, unter leichtem N2-Strom auf 60°C IT aufgeheizt. Bei erreichter IT wurden die folgenden Zuläufe gestartet:

| | |
|---|---|
| Zulauf 1: | 90 g n-Butylacrylat und 90 g Methylmethacrylat |
| Zulauf 2: | 108 g Isopropanol und 72 g MPEG MA |

Die Zuläufe wurden über 2 h zudosiert. Nach Ende der Zuläufe wurde 9 Stunden bei 60 °C nachpolymerisiert. Man erhielt eine weiße Dispersion des Copolymers P5.

**Beispiel 3:** Synthese einer Modelldispersion (Binder I)

Es wurde folgende Monomer-Emulsion hergestellt:

| | |
|---|---|
| 287,96 g | Wasser, |
| 28,13 g | $C_{12}/C_{14}$ - Alkylpolyethylenglykolsulfat (Disponil FES 77 der BASF SE, 32 %ige Lösung in Wasser), |
| 15,0 g | C16/C18 Fettalkoholpolyethylenglykol (Lutensol AT18 der BASF SE, 20 %ige Lösung in Wasser), |
| 282 g | Methymethacrylat, |
| 300 g | n-Butylacrylat, |
| 12 g | Acrylsäure und |
| 12 g | Acrylamid (50 %ige Lösung in Wasser). |

In einem 2-Liter-Reaktor mit Ankerrührer, Thermoelement und Rückflusskühler wurden 210,5 g Wasser zusammen mit 21,82 g Polystyrensaatlatex (der BASF SE, 33 %ig in Wasser) und 15,0 g einer 4% igen wässrigen Natriumperoxodisulfatlösung vorgelegt und bei 90 °C für 10 min gerührt. Anschließend wurden weitere 937,09 g der Monomer-Emulsion und weitere 60 g einer 7 %igen wässrigen Natriumperoxodisulfatlösung über einen Zeitraum vom 3 h zudosiert. Nach Ende der Zuläufe wurde die Lösung weitere 60 min bei 90°C gerührt. Anschließend wurde die Dispersion auf Raumtemperatur abgekühlt und mit 25 %iger Ammoniaklösung auf pH 8,1 neutralisiert.

Die Dispersion hatte einen Feststoffgehalt von 49,9 %, die mittlere Teilchengröße betrug 139 nm (gemessen mittels hydrodynamischer Chromatographie). Die Glastemperatur $T_g$ lag bei 16,9 °C.

**Beispiel 4:** Synthese einer Modeldispersion (Binder II) für Faserbindungsanwendungen

Es wurde folgende Monomer-Emulsion hergestellt:

| | |
|---|---|
| 142,5 g | Wasser, |
| 25,0 g | 3 % igen Natriumpyrophosphat Lösung, |
| 3,33 g | Natriumsalz der Dodecyldiphenylether-disulfonsäure (Dowfax 2A1 der Dow Chemical, 45 %ige Lösung in Wasser), |
| 26,79 g | Natriumlauryl-polyethoxysulfat (Disponil FES27 der BASF SE, 28 %ige Lösung in Wasser), |
| 395,48 g | Styrol, |
| 303,75 g | n-Butylacrylat, |
| 36,75 g | Acrylsäure und |
| 93,5 g | Methacrylamid (15 %ige Lösung in Wasser). |

In einem 2-Liter-Reaktor mit Ankerrührer, Thermoelement und Rückflusskühler wurden 427,21 g Wasser zusammen mit 14,09 g Polystyrolsaatlatex (BASF SE, 33 %ig in Wasser), 17,7 g einer 7%igen wässrigen Natriumperoxodisulfat-Lösung vorgelegt und bei 95 °C für 5 min gerührt. Anschließend wurden 1027,09 g der Monomer-Emulsion und 41,25 g einer 7 %igen Natriumperoxodisulfatlösung über einen Zeitraum von 140 min zu dosiert. Nach Ende der Zuläufe wurde die Lösung weitere 15 min bei 90° gerührt.

Nach Abkühlen auf 75°C wurden 7,5 g tert-Butylhydroperoxid Lösung (10%ige Lösung in Wasser) und 5,08 g Acetonbisulfit (13,3 %ige Lösung in Wasser) über 60 min zu dosiert. Anschließend wurde die Dispersion auf Raumtemperatur abgekühlt.

Die Dispersion hatte einen Feststoffgehalt von 49,3 %, die Teilchengröße (gemessen mittels hydrodynamischer Chromatographie) betrug 186 nm. Die Glastemperatur (gemessen mittels DSC) lag bei 36 °C.

**Beispiel 5:** Bestimmung des Quellgrades der Copolymere

Zur Herstellung von vernetzten Filmen wurde die Modelldispersion gemäß Beispiel 3 (Binder I) mit jeweils einer Polymerlösung enthaltend jeweils eines der Copolymere P2, P3 oder P4 (Oxazolin-Copolymer) abgemischt.
Dabei wurden die Mengen an Binder und Oxazolin-Copolymer so gewählt, dass ein äquimolares Verhältnis von Carbonsäuregruppen zu Oxazolingruppen vorlag.

Die Formulierungen wurden auf einen Feststoffgehalt von 20 Gew.-% verdünnt und zur Filmbildung in eine Silikonform gegeben. Die Filmbildung erfolgte a) über einen Zeitraum von 1 Woche, b) über einen Zeitraum von 4 Wochen oder c) über einen Zeitraum von 1 Woche mit nachfolgendem Tempern bei 100°C für 1 Stunde.

Die so erhaltenen Filme wurden auf ihre Quellfähigkeit in Tetrahydrofuran (THF) bestimmt. Dazu wurden die Filme für 24 h bei Raumtemperatur auf einem Laborschüttler in THF geschüttelt. Anschließend wurden sie aus dem THF entnommen, trocken getupft und gewogen.

Der Quellgrad der Filme wird gemäß der folgenden Formel bestimmt:

Quellgrad [%]= Gewicht des gequollenen Films/Gewicht des trockenen Films * 100

Ein niedriger Quellgrad bedeutet eine hohe Vernetzung des Films.

Die Ergebnisse sind in der folgenden Tabelle 2 zusammengefasst:

Tabelle 2: Quellgrad der Filme in THF

| Copolymer | Quellgrad [%] | | |
|---|---|---|---|
| | a) nach 1 Woche | b) nach 4 Wochen | c) nach 1 h und Tempern bei 100 °C |
| P4 | 45 | 10 | 6 |
| P2 | 24 | 16 | 12 |
| P3 | 64 | 20 | 12 |
| P5 | 29 | 10 | 8 |

Das erfindungsgemäße Copolymer P4 zeigt niedrigere Quellgrade, insbesondere bei Filmen, die über 4 Wochen oder unter Tempern bei 100 °C hergestellt wurden, im Vergleich zu den Vergleichsversuchen P2 und P3, welche einen Anteil an iPOx und AMPS-Na größer oder gleich 50 Gew.-% aufweisen. Das erfindungsgemäße Copolymer P4 zeigt etwas niedrigere oder ähnliche Quellgrade, insbesondere bei Filmen, die über 4 Wochen oder unter Tempern bei 100 °C hergestellt wurden, im Vergleich zu den Vergleichsversuch P5 (MPEG/MA-Copolymer).

**Beispiel 6:** Untersuchung der mechanischen Eigenschaften

Es wurden Filme mit einer Dicke von 600 µm hergestellt. Als Binder wurde die Modelldispersion gemäß Beispiel 3 (Binder I) eingesetzt.

Aus den Filmen wurden Probenkörper S3A ausgestanzt und einem Zugversuch nach ISO37 unterworfen. Dabei wird die Zugspannung $\sigma$ (in Pa oder MPa) in Abhängigkeit der Dehnung (Weg) bestimmt. Der Klemmdruck betrug 2 bar, die Prüfgeschwindigkeit betrug 100 mm/min. Der Zugversuch wurde bei 23°C durchgeführt.

Es wurde zudem zum Vergleich der kommerziell erhältliche Vernetzer Epocros® WS700 (Nippon Shokubai) eingesetzt, wobei es sich um ein Oxazolin-funktionalisiertes MPEG-MA Copolymer handelt.

Die Ergebnisse der Zugversuche sind in der folgenden Tabelle 3 zusammengefasst:

Tabelle 3: Zugdehnungsversuch

| | | Zugspannung [MPa] | | | |
|---|---|---|---|---|---|
| | | Dehnung | | | |
| Versuch-Nr. | Vernetzer (Copolymer) | 50 % | 100 % | 150 % | 200 % |
| V6-1 | kein | 3,2 | 3,9 | 4,8 | 6,2 |
| V6-2 | Copolymer P5 | 4,2 | 5,7 | 8,0 | 11,1 |
| V6-3 | Epocros® WS700 | 4,8 | 6,5 | 8,7 | 11,7 |
| V6-4 | Copolmer P1 | 7,5 | 8,6 | 10,7 | 13,7 |

**Beispiel 7:** Untersuchung zu Faserbindungsanwendungen

Die Modelldispersion gemäß Beispiel 4 (Binder II) wurde mit den Oxazolin-Copolymeren P4 und P5 abgemischt. Dabei wurden eine 0,4 mol eq Menge des Oxazolin-Copolymer bezogen auf die im Rezept eingesetzte Säuremenge zugesetzt.

Als Vergleich wurde eine kommerziell erhältliche, formaldehydfrei selbstvernetzende Dispersion, Acronal® 2416, eingesetzt.

Die beschriebenen vernetzenden Dispersionen wurden zur Herstellung von imprägnierten Filterpapieren verwendet, wobei als Rohpapier ein Cellulose-Filterpapier mit einem Flächengewicht von 103 g/m$^2$ verwendet wurde.

Zum Aufbringen der wässrigen Bindemittelflotten (Imprägnierung) wurden die Papierbögen in Längsrichtung über ein Endlos-PES-Siebband mit einer Bandlaufgeschwindigkeit von 2,0 m pro Minute jeweils durch 10,0 gew.-%ige wässrige Bindemittelflotten geleitet. Durch Absaugen der wässrigen Bindemittelflotten wurde der Nassauftrag auf 206 g/m$^2$ (entsprechend 20,6 g/m$^2$ Bindemittel als Feststoff gerechnet) eingestellt. Die so erhaltenen imprägnierten Filterpapiere wurden in einem Mathis-Ofen auf einem Kunststoffnetz als Träger für 5 Minuten bei 90 °C bei maximalem Heißluftstrom getrocknet und direkt im Anschluss in einem Mathis-Ofen 1 Minute bei 160 °C bei maximalem Heißluftstrom vernetzt. Nach dem Abkühlen auf Raumtemperatur wurden jeweils 10 Prüfkörper in Hantelform von 115 mm Länge mit einem Prüfsteg von 6 mm Breite längs und quer zur Laufrichtung ausgestanzt. Die erhaltenen Prüfkörper wurden anschließend für 24 Stunden bei 23 °C und 50 % relativer Luftfeuchtigkeit im Klimaraum gelagert.

Es wurden die im Folgenden beschriebenen Untersuchungen zur mechanischen Stabilität durchgeführt. Die Ergebnisse sind in Tabelle 4 zusammengefasst.

i) Bestimmung der Reißfestigkeit und Dehnung

Die Bestimmung der Reißkraft erfolgte bei Normklima (23 °C und 50 % relativer Luftfeuchtigkeit) an einer Zugprüfmaschine der Firma Zwick-Roell, Typ Z005. Die Prüfkörper wurden dabei senkrecht in die Spannvorrichtung eingebracht, so dass die freie Einspannlänge 70 mm betrug. Anschließend wurden die eingespannten Prüfkörper mit einer Geschwindigkeit von 50 mm pro Minute in entgegengesetzter Richtung bis zum Riss der Prüfkörper auseinander gezogen. Die Angabe der Reißfestigkeit erfolgte in N/mm$^2$. Es erfolgten jeweils 5 Messungen in Längs- und Querrichtung. Die in der Tabelle 4 angegebenen Werte stellen jeweils den Mittelwert dieser Messungen dar.

Die Dehnung wurde ausgehend von der Einspannlänge und mit der beim Riss des Probekörpers gemessenen Längenänderung errechnet. Die Angabe der Dehnung erfolgte in %. Der in der Tabelle 4 angegebene Wert ist der Mittelwert aus 5 Einzelmessungen.

ii) Bestimmung Nassreißfestigkeit und Dehnung

Zur Bestimmung der Nassreißfestigkeit wurden die Prüfkörper für 2 Minuten in 2 %iger Lösung eines Natriumalkylsulfonates (Emulgator E 30) gelagert. Danach wurde die überschüssige Lösung mit einem Baumwollgewebe abgetupft. Die Bestimmung der Nassreißfestigkeit erfolgte an einer Zugprüfmaschine der Firma Zwick-Roell, Typ Z005. Die Prüfkörper wurden dabei senkrecht in die Spannvorrichtung eingebracht, so dass die freie Einspannlänge 70 mm betrug. Anschließend wurden die eingespannten Prüfkörper mit einer Geschwindigkeit von 50 mm pro Minute in entgegengesetzter Richtung bis zum Riss der Prüfkörper auseinander gezogen. Die Angabe der Reißfestigkeit erfolgte in N/mm$^2$. Es erfolgten jeweils 5 Messungen in Längs- und Querrichtung. Die in der Tabelle 4 angegebenen Werte stellen jeweils den Mittelwert dieser Messungen dar.

Die Dehnung wird ausgehend von der Einspannlänge mit der beim Riss des Probekörpers gemessenen Längenänderung errechnet. Die Angabe der Dehnung erfolgte in %. Der in der Tabelle 4 angegebene Wert ist der Mittelwert

aus 5 Einzelmessungen.

iii) Bestimmung Heißreißkraft und Dehnung

Zur Bestimmung der Heißreißkraft wurden 5 Prüfstreifen von 50 x 200 mm längs zur Laufrichtung aus den imprägnierten Filterpapierbögen gestanzt.

Die Bestimmung der Heißreißkraft erfolgte an einer Zugprüfmaschine der Firma Zwick-Roell, Typ Z010 deren Spannvorrichtung sich in einer beheizbaren Kammer befand. Die Prüfkörper wurden in der auf 150° C vorgeheizten Kammer senkrecht in eine Spannvorrichtung eingebracht, so dass die freie Einspannlänge 100 mm betrug. Nach einer Wartezeit von 1 Minute bei Solltemperatur (ab Wiedererreichen von 149 °C) wurden die eingespannten Prüfstreifen mit einer Geschwindigkeit von 50 mm pro Minute in entgegengesetzter Richtung bis zum Riss der Prüfstreifen auseinander gezogen. Die Angabe der Heißreißkraft erfolgte in N/m (bezogen auf die Probenbreite). Es erfolgten jeweils 5 separate Messungen. Die in der Tabelle 4 angegebenen Werte stellen jeweils den Mittelwert dieser Messungen dar.

Die Dehnung wird ausgehend von der Einspannlänge mit der beim Riss des Probekörpers gemessenen Längenänderung errechnet. Die Angabe der Dehnung erfolgte in %. Der in der Tabelle 4 angegebene Wert ist der Mittelwert aus 5 Einzelmessungen.

iv) Bestimmung des Berstdrucks

Die Bestimmung des Berstdrucks erfolgte an einer Prüfmaschine der Fa. Zwick/Roell Typ Z 005 mit Prüfmodul Berstdruck. Es wurde eine Membran mit einer Dicke von 0,86 mm verwendet, die sich bei einem Druck von 30 kPa um 9,0 mm aufwölbt. Die Fördermenge des Hydrauliksystems betrug 95 ml/min. Die Bestimmung des Berstdrucks ist in DIN ISO 2758 und DIN ISO 2759 beschrieben.

Zur Bestimmung des Berstdrucks wurden 5 Proben von 175 x 230 mm aus den imprägnierten Filterpapierbögen geschnitten. Die Proben wurden mindestens 15 h bei Normklime (23 °C und 50 % rel. Luftfeuchtigkeit) konditioniert.

Die Proben wurden über der elastischen, kreisförmigen Membran eingespannt, so dass sie sich mit der Membran frei aufwölben konnten. Die Membran wurde mit gleichmäßiger Fördermenge der hydraulischen Flüssigkeit so lange aufgewölbt bis die Probe birst. Der maximal aufgewandte Druck in kPa wird als Berstdruck bezeichnet.

Zur Nassprüfung wurden die Proben 2 Minuten in eine 2 % ige Lösung eines Natriumalkylsulfonates (Emulgator E 30) gelegt. Anschließend wird sie mit einem Baumwollgewebe trocken getupft und wie beschrieben gemessen. Der in der Tabelle 4 angegebene Wert ist der Mittelwert aus 5 Einzelmessungen.

Tabelle 4: Ergebnisse zur mechanischen Untersuchung der imprägnierten Filterpapiere

| Versuch-Nr. | | V7-1 | V7-2 | V7-3 |
|---|---|---|---|---|
| Binder | | Binder II | Binder II | Acronal 2416 |
| Vernetzer | | Copolymer P4 | Copolymer P5 | |
| Reißfestigkeit in $N/mm^2$ Trocken | längs | 10,2 | 8,7 | 7,8 |
| | quer | 7,8 | 7,0 | 6,3 |
| Dehnung in % Trocken | längs | 3,6 | 3,6 | 3,4 |
| | quer | 4,9 | 5,1 | 4,3 |
| Reißfestigkeit in $N/mm^2$ Nass | längs | 4,1 | 3,2 | 1,7 |
| | quer | 2,4 | 2,3 | 1,4 |
| Dehnung in [%] Nass | längs | 6,5 | 6,6 | 4,0 |
| | quer | 7,7 | 8,0 | 5,4 |
| Reißfestigkeit in N/m trocken, 150°C | längs | 1587 | 1321 | 1307 |
| Dehnung in % trocken, 150°C | längs | 2,2 | 1,9 | 1,9 |
| Berstdruck in kPa | trocken | 354 | 340 | 310 |
| | nass | 242 | 166 | 93 |

Bei Verwendung des erfindungsgemäßen Copolymers P4 als Vernetzer weisen die imprägnierten Filterpapiere

eine deutlich verbesserte mechanische Stabilität auf im Vergleich zu den Versuchen V7-2 und V7-3. Der erfindungsgemäße Vernetzer weißt eine verbesserte Faserbindung auf.

## Patentansprüche

1. Copolymer A umfassend

   a) mindestens ein Monomer (a) ausgewählt aus der Gruppe bestehend aus $C_{1-20}$-Alkyl(meth)acrylaten und $C_{8-20}$-Vinylaromaten;
   b) mindestens ein ethylenisch ungesättigtes Monomer (b), welches mindestens eine Sulfonsäuregruppe ($-SO_3M$) umfasst;
   c) mindestens ein ethylenisch ungesättigtes Monomer (c), welches mindestens eine Oxazolingruppe umfasst;
   d) und optional mindestens ein weiteres Monomer (d) und/oder Additiv;

   wobei der Anteil der Monomere (b) und (c) in der Summe weniger als 50 Gew.-%, bezogen auf die gesamte Menge der Monomere im Copolymer A, beträgt
   und wobei es sich bei dem Copolymer A um ein wasserlösliches Polymer handelt, wobei wasserlöslich eine Löslichkeit in Wasser von mindestens 100 g/l umfasst.

2. Copolymer gemäß Anspruch 1, **dadurch gekennzeichnet, dass** der Anteil der Monomere (b) und (c) in der Summe 2 bis 49,9 Gew.-%, bezogen auf die gesamte Menge der Monomere im Copolymer A, beträgt.

3. Copolymer gemäß einem der Ansprüche 1 oder 2, **dadurch gekennzeichnet, dass** das Copolymer A ausschließlich die Monomere (b) und (c) als wasserlösliche Monomere enthält.

4. Copolymer gemäß einem der Ansprüche 1 bis 3, **dadurch gekennzeichnet, dass** das Copolymer A als Monomer (a) 50 bis 98 Gew.-%, bezogen auf die gesamte Menge der Monomere im Copolymer A, mindestens ein Monomer ausgewählt aus der Gruppe bestehend aus $C_{1-8}$-Alkyl(meth)acrylaten umfasst.

5. Copolymer gemäß einem der Ansprüche 1 bis 4, **dadurch gekennzeichnet, dass** es sich bei Monomer (b) um eine Verbindung der Formel (II)

   $$H_2C=C(R^1)C(=O)-NH-Z-SO_3M \quad \text{(II)},$$

   handelt, wobei die Reste und Indices die folgenden Bedeutungen haben:

   $R^1$ ist H oder Methyl;
   Z ist eine zweiwertige verknüpfende Gruppe ausgewählt aus einer Bindung, $C_{1-10}$-Alkylen, Phenylen und $C_{1-10}$-Alkylphenylen;
   und M ist ein oder mehrere Metalle.

6. Copolymer gemäß einem der Ansprüche 1 bis 5, **dadurch gekennzeichnet, dass** es sich bei Monomer (c) um eine Verbindung gemäß Formel (IV) handelt

   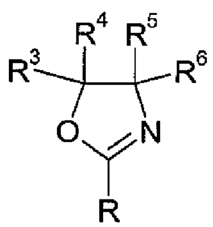

   (IV),

   wobei die Reste die folgenden Bedeutungen haben:

   R ist ein $C_{2-20}$-Alkenylrest umfassend mindestens eine ethylenisch ungesättigte Gruppe;
   $R^3$, $R^4$, $R^5$, $R^6$ sind unabhängig voneinander ausgewählt aus H, Halogen, $C_{1-20}$-Alkyl, $C_{2-20}$-Alkenyl, $C_{6-20}$-Aryl,

$C_{7-32}$-Arylalkyl, $C_{1-20}$-Hydroxyalkyl, $C_{1-20}$-Aminoalkyl und $C_{1-20}$-Haloalkyl.

**7.** Copolymer gemäß Anspruch 6, wobei die Reste $R^3$, $R^4$, $R^5$, $R^6$ unabhängig voneinander ausgewählt sind aus H und $C_{1-6}$-Alkyl.

**8.** Copolymer gemäß einem der Ansprüche 1 bis 7, **dadurch gekennzeichnet, dass** das Copolymer A

50 bis 98 Gew.-% des mindestens einen Monomers (a);
1 bis 45 Gew.-% des mindestens einen Monomers (b);
1 bis 45 Gew.-% des mindestens einen Monomers (c) und
0 bis 10 Gew.-% des mindestens einen weiteren Monomers (d) und/oder Additivs,

umfasst, wobei der Anteil der Monomere (b) und (c) in der Summe weniger als 50 Gew.-%, bezogen auf die gesamte Menge der Monomere im Copolymer A, beträgt.

**9.** Copolymer gemäß einem der Ansprüche 1 bis 8, **dadurch gekennzeichnet, dass** das Copolymer A

50 bis 98 Gew.-% des mindestens einen Monomers (a), wobei es sich bei Monomer (a) um mindestens ein $C_{1-12}$-Alkyl(meth)acrylat handelt;
1 bis 45 Gew.-% des mindestens einen Monomers (b), wobei es sich bei Monomer (b) um ein monoethylenisch ungesättigtes Monomer handelt, welches genau eine Sulfonsäuregruppe umfasst;
1 bis 45 Gew.-% des mindestens eine Monomers (c), wobei es sich bei Monomer (c) um mindestens ein Monomer handelt ausgewählt aus 2-Vinyl-2-oxazolin, 2-Vinyl-4-methyl-2-oxazolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-teramethyl-2-oxazolin, 2-Isopropenyl-2-oxazolin, 2-Isopropenyl-4-methyl-2-oxazolin, 2-Isopropenyl-5-methyl-2-oxazolin, 2-Isopropenyl-4-ethyl-2-oxazolin, 2-Isopropenyl-5-ethyl-2-oxazolin, 2-Isopropenyl-4,4-dimethyl-2-oxazolin, 2- Isopropenyl-5,5-dimethyl-2-oxazolin und 2- Isopropenyl-4,4,5,5-teramethyl-2-oxazolin,
0 bis 10 Gew.-% des mindestens einen weiteren Monomers (d) und/oder Additivs,

umfasst, wobei der Anteil der Monomere (b) und (c) in der Summe weniger als 50 Gew.-%, bezogen auf die gesamte Menge der Monomere im Copolymer A, beträgt.

**10.** Verfahren zur Herstellung eines Copolymers A gemäß einem der Ansprüche 1 bis 9, wobei

a) mindestens ein Monomer (a) ausgewählt aus der Gruppe bestehend aus $C_{1-20}$-Alkyl(meth)acrylaten und $C_{8-20}$-Vinylaromaten;
b) mindestens ein ethylenisch ungesättigtes Monomer (b), welches mindestens eine Sulfonsäuregruppe ($-SO_3M$) umfasst;
c) mindestens ein ethylenisch ungesättigtes Monomer (c), welches mindestens eine Oxazolingruppe umfasst;
d) und optional mindestens ein weiteres Monomer

polymerisiert werden.

**11.** Verfahren gemäß Anspruch 10, **dadurch gekennzeichnet, dass** die Monomere (a), (b), (c) und optional (d) radikalisch polymerisiert werden, wobei die radikalische Polymerisation als Lösungspolymerisation durchgeführt wird.

**12.** Verwendung eines Copolymers A gemäß einem der Ansprüche 1 bis 9 zur Vernetzung eines polyfunktionellen Polymers P umfassend mindestens zwei funktionelle Gruppen ausgewählt aus Carboxygruppen, Phosphorsäuregruppen, phenolischen Hydroxygruppen und aromatischen Thiol-Gruppen.

**13.** Verfahren zur Vernetzung eines polyfunktionellen Polymers P umfassend mindestens zwei funktionelle Gruppen ausgewählt aus Carboxygruppen, Phosphorsäuregruppen, phenoli-schen Hydroxygruppen und aromatischen Thiolgruppen, wobei zu dem polyfunktionellen Polymer P mindestens ein Copolymer A gemäß einem der Ansprüche 1 bis 9
zugegeben wird.

**14.** Zusammensetzung enthaltend

i) mindestens ein Copolymer A gemäß einem der Ansprüche 1 bis 9
ii) mindestens ein polyfunktionelles Polymer P umfassend mindestens zwei funktionelle Gruppen ausgewählt aus Carboxygruppen, Phosphorsäuregruppen, phenolischen Hydroxygruppen und aromatischen Thiolgruppen, und
iii) mindestens eine flüchtige, basische Verbindung.

**15.** Verwendung einer Zusammensetzung gemäß Anspruch 14 als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil-oder Lederhilfsmitteln und Schlagzähmodifizierer oder zur Modifizierung von mineralischen Bindemitteln und Kunststoffen.

## Claims

**1.** A copolymer A comprising

a) at least one monomer (a) selected from the group consisting of $C_{1-20}$-alkyl (meth) acrylates and $C_{8-20}$-vinylaromatics;
b) at least one ethylenically unsaturated monomer (b), which comprises at least one sulfonic acid group ($-SO_3M$);
c) at least one ethylenically unsaturated monomer (c), which comprises at least one oxazoline group;
d) and optionally at least one further monomer (d) and/or additive;

where the fraction of the monomers (b) and (c) is in total less than 50% by weight, based on the total amount of the monomers in the copolymer A,
and where copolymer A is a water-soluble polymer, where water-soluble comprises a solubility in water of at least 100 g/l.

**2.** The copolymer according to claim 1, wherein the fraction of the monomers (b) and (c) is in total 2 to 49.9% by weight, based on the total amount of the monomers in the copolymer A.

**3.** The copolymer according to either of claims 1 and 2,
wherein the copolymer A comprises exclusively the monomers (b) and (c) as water-soluble monomers.

**4.** The copolymer according to any one of claims 1 to 3,
wherein the copolymer A comprises, as monomer (a), 50 to 98% by weight, based on the total amount of the monomers in the copolymer A, of at least one monomer selected from the group consisting of $C_{1-8}$-alkyl (meth)acrylates.

**5.** The copolymer according to any one of claims 1 to 4,
wherein monomer (b) is a compound of the formula (II)

$$H_2C=C(R^1)C(=O)-NH-Z-SO_3M \quad \text{(II)},$$

where the radicals and indices have the following meanings:

$R^1$ is H or methyl;
Z is a divalent linking group selected from a bond,
$C_{1-10}$-alkylene, phenylene and $C_{1-10}$-alkylphenylene;
and M is one or more metals.

**6.** The copolymer according to any one of claims 1 to 5,
wherein monomer (c) is a compound according to formula (IV)

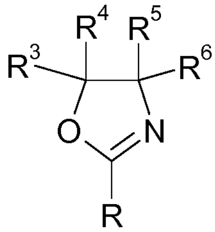

(IV),

where the radicals have the following meanings:

Ris a $C_{2-20}$-alkenyl radical comprising at least one ethylenically unsaturated group;
$R^3$, $R^4$, $R^5$, $R^6$ are selected independently of one another from H, halogen, $C_{1-20}$-alkyl, $C_{2-20}$-alkenyl, $C_{6-20}$-aryl, $C_{7-32}$-arylalkyl, $C_{1-20}$-hydroxyalkyl, $C_{1-20}$-aminoalkyl and $C_{1-20}$-haloalkyl.

**7.** The copolymer according to claim 6, where the radicals $R^3$, $R^4$, $R^5$, $R^6$, independently of one another, are selected from H and $C_{1-6}$-alkyl.

**8.** The copolymer according to any one of claims 1 to 7, wherein the copolymer A comprises

50 to 98% by weight of the at least one monomer (a);
1 to 45% by weight of the at least one monomer (b);
1 to 45% by weight of the at least one monomer (c) and
0 to 10% by weight of the at least one further monomer (d) and/or additive,

where the fraction of the monomers (b) and (c) is in total less than 50% by weight, based on the total amount of the monomers in the copolymer A.

**9.** The copolymer according to any one of claims 1 to 8, wherein the copolymer A comprises

50 to 98% by weight of the at least one monomer (a), where monomer (a) is at least one $C_{1-12}$-alkyl (meth)acrylate;
1 to 45% by weight of the at least one monomer (b), where monomer (b) is a monoethylenically unsaturated monomer which comprises precisely one sulfonic acid group;
1 to 45% by weight of the at least one monomer (c), where monomer (c) is at least one monomer selected from 2-vinyl-2-oxazoline, 2-vinyl-4-methyl-2-oxazoline, 2-vinyl-5-methyl-2-oxazoline, 2-vinyl-4-ethyl-2-oxazoline, 2-vinyl-4,4-dimethyl-2-oxazoline, 2-vinyl-5,5-dimethyl-2-oxazoline, 2-vinyl-4,4,5,5-teramethyl-2-oxazoline, 2-isopropenyl-2-oxazoline, 2-isopropenyl-4-methyl-2-oxazoline, 2-isopropenyl-5-methyl-2-oxazoline, 2-isopropenyl-4-ethyl-2-oxazoline, 2-isopropenyl-5-ethyl-2-oxazoline, 2-isopropenyl-4,4-dimethyl-2-oxazoline, 2-isopropenyl-5,5-dimethyl-2-oxazoline and 2-isopropenyl-4,4,5,5-teramethyl-2-oxazoline,
0 to 10% by weight of the at least one further monomer (d) and/or additive,

where the fraction of the monomers (b) and (c) is in total less than 50% by weight, based on the total amount of the monomers in the copolymer A.

**10.** A process for the preparation of a copolymer A according to any one of claims 1 to 9, where

a) at least one monomer (a) selected from the group consisting of $C_{1-20}$-alkyl (meth) acrylates and $C_{8-20}$-vinylaromatics;
b) at least one ethylenically unsaturated monomer (b), which comprises at least one sulfonic acid group ($-SO_3M$);
c) at least one ethylenically unsaturated monomer (c), which comprises at least one oxazoline group;
d) and optionally at least one further monomer are polymerized.

**11.** The process according to claim 10, wherein the monomers (a), (b), (c) and optionally (d) are free-radically polymerized, where the free-radical polymerization is carried out as solution polymerization.

**12.** The use of a copolymer A according to any one of claims 1 to 9 for crosslinking a polyfunctional polymer P comprising

at least two functional groups selected from carboxy groups, phosphoric acid groups, phenolic hydroxy groups and aromatic thiol groups.

**13.** A method for crosslinking a polyfunctional polymer P comprising at least two functional groups selected from carboxy groups, phosphoric acid groups, phenolic hydroxy groups and aromatic thiol groups, where at least one copolymer A according to any one of claims 1 to 9 is added to the polyfunctional polymer P.

**14.** A composition comprising

i) at least one copolymer A according to any one of claims 1 to 9;
ii) at least one polyfunctional polymer P comprising at least two functional groups selected from carboxy groups, phosphoric acid groups, phenolic hydroxy groups and aromatic thiol groups, and
iii)at least one volatile, basic compound.

**15.** The use of a composition according to claim 14 as binder in the production of adhesives, sealants, synthetic resin renders, paper coating slips, fiber nonwovens, flexible roof coatings and paints, and also in sand consolidation, as a component in the production of textile or leather auxiliaries and impact modifiers or for modifying mineral binders and plastics.

## Revendications

**1.** Copolymère A, comprenant

a) au moins un monomère (a) choisi parmi le groupe constitué de (méth) acrylates d'alkyle en $C_{1-20}$ et de composés vinylaromatiques en $C_{8-20}$ ;
b) au moins un monomère éthyléniquement insaturé (b), qui comprend au moins un groupe acide sulfonique ($-SO_3M$) ;
c) au moins un monomère éthyléniquement insaturé (c), qui comprend au moins un groupe oxazoline ;
d) et éventuellement au moins un monomère supplémentaire (d), et/ou un additif ;

la proportion des monomères (b) et (c) dans leur totalité valant moins de 50 % en poids par rapport à la quantité totale des monomères dans le copolymère A,
et le copolymère A étant un polymère soluble dans l'eau, soluble dans l'eau signifiant une solubilité dans l'eau d'au moins 100 g/l.

**2.** Copolymère selon la revendication 1, **caractérisé en ce que** la proportion des monomères (b) et (c) dans leur totalité vaut 2 à 49,9 % en poids par rapport à la quantité totale des monomères dans le copolymère A.

**3.** Copolymère selon l'une quelconque des revendications 1 ou 2, **caractérisé en ce que** le copolymère A contient exclusivement les monomères (b) et (c) en tant que monomères solubles dans l'eau.

**4.** Copolymère selon l'une quelconque des revendications 1 à 3, **caractérisé en ce que** le copolymère A comprend, en tant que monomère (a), 50 à 98 % en poids, par rapport à la quantité totale des monomères dans le copolymère A, d'au moins un monomère choisi dans le groupe constitué de (méth) acrylates d'alkyle en $C_{1-8}$.

**5.** Copolymère selon l'une quelconque des revendications 1 à 4, **caractérisé en ce que** le monomère (b) est un composé de formule (II)

$$H_2C=C(R^1)C(=O)-NH-Z-SO_3M \qquad (II)$$

dans laquelle les radicaux et les indices ont les significations suivantes :

$R^1$ est H ou méthyle ;
Z est un groupe de liaison bivalent choisi à partir d'une liaison, alkylène en $C_{1-10}$, phénylène, et alkylphénylène en $C_{1-10}$ ;
et M est un ou plusieurs métaux.

**6.** Copolymère selon l'une quelconque des revendications 1 à 5, **caractérisé en ce que** le monomère (c) est un composé de formule (IV)

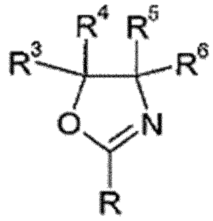

(IV),

dans laquelle les radicaux ont les significations suivantes :

R est un radical alcényle en $C_{2-20}$ comprenant au moins un groupe éthyléniquement insaturé ;
$R^3$, $R^4$, $R^5$, $R^6$, indépendamment les uns des autres, sont choisis parmi H, halogène, alkyle en $C_{1-20}$, alcényle en $C_{2-20}$, aryle en $C_{6-20}$, arylalkyle en $C_{7-32}$, hydroxyalkyle en $C_{1-20}$, aminoalkyle en $C_{1-20}$ et halogénoalkyle en $C_{1-20}$.

**7.** Copolymère selon la revendication 6, dans lequel les radicaux $R^3$, $R^4$, $R^5$, $R^6$, indépendamment les uns des autres, sont choisis parmi H et alkyle en $C_{1-6}$.

**8.** Copolymère selon l'une quelconque des revendications 1 à 7, **caractérisé en ce que** le copolymère A comprend

50 à 98 % en poids de l'au moins un monomère (a) ;
1 à 45 % en poids de l'au moins un monomère (b) ;
1 à 45 % en poids de l'au moins un monomère (c) et 0 à 10 % en poids de l'au moins un monomère supplémentaire (d) et/ou de l'additif,
la proportion des monomères (b) et (c) dans leur totalité valant moins de 50 % en poids par rapport à la quantité totale des monomères dans le copolymère A.

**9.** Copolymère selon l'une quelconque des revendications 1 à 8, **caractérisé en ce que** le copolymère A comprend

50 à 98 % en poids de l'au moins un monomère (a), le monomère (a) étant au moins un (méth) acrylate d'alkyle en $C_{1-12}$ ;
1 à 45 % en poids de l'au moins un monomère (b), le monomère (b) étant un monomère monoéthyléniquement insaturé qui comprend exactement un groupe acide sulfonique ;
1 à 45 % en poids de l'au moins un monomère (c), le monomère (c) étant au moins un monomère choisi parmi 2-vinyl-2-oxazoline, 2-vinyl-4-méthyl-2-oxazoline, 2-vinyl-5-méthyl-2-oxazoline, 2-vinyl-4-éthyl-2-oxazoline, 2-vinyl-4,4-diméthyl-2-oxazoline, 2-vinyl-5,5-diméthyl-2-oxazoline, 2-vinyl-4,4,5,5-teraméthyl-2-oxazoline, 2-isopropényl-2-oxazoline, 2-isopropényl-4-méthyl-2-oxazoline, 2-isopropényl-5-méthyl-2-oxazoline, 2-isopropényl-4-éthyl-2-oxazoline, 2-isopropényl-5-éthyl-2-oxazoline, 2-isopropényl-4,4-diméthyl-2-oxazoline, 2-isopropényl-5,5-diméthyl-2-oxazoline et 2-isopropényl-4,4,5,5-teraméthyl-2-oxazoline,
0 à 10 % en poids de l'au moins un monomère supplémentaire (d) et/ou de l'additif,
la proportion des monomères (b) et (c) dans leur totalité valant moins de 50 % en poids par rapport à la quantité totale des monomères dans le copolymère A.

**10.** Procédé de préparation d'un copolymère A selon l'une quelconque des revendications 1 à 9, dans lequel sont polymérisés

a) au moins un monomère (a) choisi dans le groupe constitué de (méth) acrylates d'alkyle en $C_{1-20}$ et de composés vinylaromatiques en $C_{8-20}$ ;
b) au moins un monomère éthyléniquement insaturé (b), qui comprend au moins un groupe acide sulfonique ($-SO_3M$) ;
c) au moins un monomère éthyléniquement insaturé (c), qui comprend au moins un groupe oxazoline ;
d) et éventuellement au moins un monomère supplémentaire.

**11.** Procédé selon la revendication 10, **caractérisé en ce que** les monomères (a), (b), (c) et éventuellement (d) sont

polymérisés par voie radicalaire, la polymérisation radicalaire étant effectuée en tant que polymérisation en solution.

**12.** Utilisation d'un copolymère A selon l'une quelconque des revendications 1 à 9 pour la réticulation d'un polymère polyfonctionnel P comprenant au moins deux groupes fonctionnels choisis parmi des groupes carboxy, des groupes acide phosphorique, des groupes hydroxy phénoliques et des groupes thiol aromatiques au moins un copolymère A selon l'une quelconque des revendications 1 à 9 étant ajouté au polymère polyfonctionnel P.

**13.** Procédé pour la réticulation d'un polymère polyfonctionnel P comprenant au moins deux groupes fonctionnels choisis parmi des groupes carboxy, des groupes acide phosphorique, des groupes hydroxy phénoliques et des groupes thiol aromatiques.

**14.** Composition comprenant

i) au moins un copolymère A selon l'une quelconque des revendications 1 à 9
ii) au moins un polymère polyfonctionnel P comprenant au moins deux groupes fonctionnels choisis parmi des groupes carboxy, des groupes acide phosphorique, des groupes hydroxy phénoliques et des groupes thiol aromatiques, et
iii) au moins un composé basique volatil.

**15.** Utilisation d'une composition selon la revendication 14 en tant que liant pour la préparation d'adhésifs, de masses de scellement, d'enduits à base de résines synthétiques, de pâtes de couchage pour papier, de non-tissés, de revêtements de toiture flexibles et d'agents de revêtement ainsi que pour la solidification du sable, en tant que composant pour la préparation d'adjuvants pour textiles ou cuirs et d'agents de modification de la résilience ou pour la modification de liants minéraux et de matières synthétiques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3509235 A
- US 5300602 A
- US 2897182 A
- JP 2001310014 A
- JP 2008069249 A
- JP 2001310914 A
- EP 2680343 A